# EUROPEAN PATENT APPLICATION

(11) **EP 4 467 616 A1**
(43) Date of publication of application: **27.11.2024**
(21) Application number: 23763376.3
(22) Date of filing: 27.02.2023
(51) Int. Cl.: C08L 101/00, C08K 3/00, C08K 7/06, F16C 33/12, F16C 33/16, F16C 33/20

(54) **RESIN COMPOSITION FOR SLIDING, AND SLIDING MEMBER**

(30) Priority: 04.03.2022 JP 2022033922
(71) Applicant: Oiles Corporation, Kanagawa 252-0811 (JP)
(72) Inventor: TAKECHI Ryuto, Fujisawa-shi, Kanagawa 252-0811 (JP); SAITO Aoi, Fujisawa-shi, Kanagawa 252-0811 (JP); TAKAHASHI Kohei, Fujisawa-shi, Kanagawa 252-0811 (JP)
(74) Representative: Patentanwälte Bressel und Partner mbB
(86) International application number: PCT/JP2023/006913
(87) International publication number: WO 2023/167117

(57) **Abstract**

A resin composition for a sliding material that could provide a sliding member used in a submersible pump or the like, the sliding member having a favorable balance between sliding properties and the linear expansion coefficient, and the like, and a sliding member derived from such a resin composition for a sliding material, are provided.

Provided are the resin composition for a sliding material including the following blending components (a) to (c), and a sliding member derived from such a resin composition for a sliding material:
(a) 100 parts by weight of a resin component;
(b) 10 to 400 parts by weight of uncarbonized carbon fiber having a 5% weight loss temperature of 400 to 550°C; and
(c) 10 to 80 parts by weight of an inorganic material.

## Description

### TECHNICAL FIELD

The present invention relates to a resin composition for a sliding material and a sliding member.

More specifically, the invention relates to a resin composition for a sliding material that can provide a sliding member having a favorable balance between sliding properties and the linear expansion coefficient, and the like, on the premise that a predetermined amount of an inorganic material is blended as a blending component, and to a sliding member derived from such a resin composition for a sliding material.

### BACKGROUND ART

Conventional submersible pumps have been used in various use applications such as devices for pumping water from rivers and the sea as well as water circulation and the like in water heaters, floor heating appliances, automobile engines, inverters, batteries, and fuel cells. One example of such submersible pumps (water pumps) includes the following configurations 1) to 5) and is configured to include predetermined sliding members (a slide bearing and a thrust-bearing member) (see, for example, Patent Document 1):
1) an impeller;
2) a shaft for fixing the impeller;
3) a slide bearing fixed to the impeller for supporting the impeller in a freely rotatable manner relative to the shaft;
4) a thrust-bearing member sliding against each end face of the slide bearing; and
5) a casing and a cover housing the impeller and forming a pump chamber.

A slide bearing, which is a sliding member, is a cylindrical-shaped bearing that receives loads at the inner diameter and the end faces and has the same thickness as the end faces, and is an injection molded article derived from a resin composition containing a straight-chained polyphenylene sulfide resin as a base resin.

That is, the slide bearing is an injection molded article derived from a resin composition including carbon fiber as a carbonized product fired at 1000 to 1500°C and at least one of a polytetrafluoroethylene resin and graphite, with respect to a predetermined base resin.

Furthermore, a sliding member formed by using a predetermined uncarbonized carbonaceous fiber, which is different from the uncarbonized carbon fiber of the invention, as a reinforcing material has also been proposed (see, for example, Patent Document 2).

More specifically, it is a sliding member formed from a sintered body which has a predetermined shape and is obtained by sintering a composite body composed of the following blending components 1) to 3).

The sliding member is a sliding member containing a predetermined amount of carbon fiber as an uncarbonized carbonaceous fiber, which is obtained by, for example, supplying raw material pitch to a spinner, extruding the raw material pitch through a nozzle in a state of being heated to 300 to 400°C under pressure of an inert gas to obtain a raw material fiber, and then retaining the obtained raw material fiber in an oxidizing atmosphere at about 150 to 500°C for about 0.5 to 5 hours to be insolubilized.
1) Uncarbonized carbonaceous fiber obtained by a heat treatment at a temperature of 550°C or lower
2) Inorganic powder or inorganic fiber of a boron compound or the like
3) Uncarbonized carbonaceous fiber, and an inorganic powder of a boron compound or the like or carbonaceous powder having self-sinterability in which the inorganic fiber is embedded

An uncarbonized carbonaceous fiber is defined as a carbonaceous fiber that has not been subjected to a carbonization treatment at ordinary temperatures, which may be possibly heat-treated (firing) at a temperature of 550°C or lower and further carbonized.

According to the Examples of Patent Document 2, the composite body composed of the above-described 1) to 3) is all heated to 1000°C in a non-oxidizing atmosphere or a nitrogen gas atmosphere at normal pressure to be subjected to primary sintering, and is further heated to 1300°C, 1700°C, or 2000°C in the same atmosphere to be subjected to secondary sintering. Therefore, the uncarbonized carbonaceous fiber of Patent Document 2 is ultimately heat-treated at a temperature of substantially 1000°C or higher.

### CITATION LIST

### PATENT DOCUMENT

Patent Document 1: JP 6639592 B2 (claims and the like)
Patent Document 2: JP H3-237062 A (claims and the like)

### SUMMARY OF THE INVENTION

### PROBLEM TO BE SOLVED BY THE INVENTION

However, the sliding member (slide bearing or the like) used for the submersible pump (water pump) described in Patent Document 1 uses a carbonized product fired at 1000 to 1500°C as a reinforcing fiber for a predetermined resin.

Therefore, there can be seen a problem that the balance between sliding properties and the linear expansion coefficient in the sliding member is poor.

That is, when a large amount of a conventional carbonized product (hereinafter, may be referred to as carbonized carbon fiber), graphitized carbon fiber, an inorganic filler, or the like is blended with respect to the resin component in order to obtain a desired linear expansion coefficient, wear of the sliding member progresses with the passage of time, and consequently, there is a tendency that the carbon fiber, the inorganic filler, and the like are likely to be exposed at the surface.

Therefore, as the friction coefficient of the sliding member increases, or the mating material is damaged, sliding properties are notably deteriorated, and in addition, there is a problem that excessive heat generation occurs, which exceeds the heat resistance of the resin component and causes the sliding member to melt.

On the other hand, when the blending amount of a conventional carbonized carbon fiber, a graphitized carbon fiber, an inorganic filler, or the like with respect to the resin component is decreased, there are problems in that the mechanical strength of the sliding member is decreased, resulting in an increase in the wear amount, and that the linear expansion coefficient of the sliding member is increased, resulting in large dimensional changes caused by sliding heat, and the desired dimensional accuracy could not be maintained.

Furthermore, with regard to the sliding member described in Patent Document 2, it was necessary to use an uncarbonized carbonaceous fiber obtained by firing at an extremely low temperature, and there was a problem that it is difficult to maintain satisfactory sliding properties and a low linear expansion coefficient.

That is, for example, it was necessary to use an uncarbonized carbonaceous fiber obtained by extruding raw material pitch through a nozzle at 300 to 400°C under pressure of an inert gas to obtain a raw material fiber, and then retaining the raw material fiber in an oxidizing atmosphere at about 150 to 500°C for about 0.5 to 5 hours.

This is for the purpose of enhancing the interfacial adhesion with a carbonaceous powder having self-sinterability, and ultimately, the desired strength could not be obtained unless primary sintering is performed by heating the uncarbonized carbonaceous fiber to 1000°C in a non-oxidizing atmosphere or a nitrogen gas atmosphere at normal pressure as described above, and secondary sintering is performed by heating the resultant to 1300°C, 1700°C, or 2000°C in the same atmosphere.

In addition, the sliding member described in Patent Document 2 is an invention related to a carbon fiber-reinforced carbon composite material, a so-called C/C composite, and there is no description or consideration on blending the uncarbonized carbonaceous fiber described in Patent Document 2 into a resin composition.

Thus, the inventors conducted an extensive investigation and found that with regard to a resin composition for a sliding material, by blending a resin component as a blending component (a) with a predetermined uncarbonized carbon fiber as a blending component (b), an inorganic material as a blending component (c), and the like at predetermined proportions, when the resin composition for a sliding material is processed into a sliding member, a low friction coefficient and a small value of wear amount are obtained while maintaining a low linear expansion coefficient, thus completing the present invention.

That is, it is an object of the invention to provide a resin composition for a sliding material including at least blending components (a) to (c), the resin composition for a sliding material being capable of giving, when processed into a sliding member, a sliding member that exhibits excellent sliding properties and the like over a long period of time, and a sliding member derived from the resin composition for a sliding material.

### MEANS FOR SOLVING PROBLEM

According to the present invention, a resin composition for a sliding material containing the following blending components (a) to (c) is provided, and the above-mentioned problems can be solved:
(a) 100 parts by weight of a resin component;
(b) 10 to 400 parts by weight of uncarbonized carbon fiber having a 5% weight loss temperature of 400 to 550°C; and
(c) 10 to 80 parts by weight of an inorganic material.

In this way, in a resin composition for a sliding material, by blending a resin component as a blending component (a) with uncarbonized carbon fiber as a blending component (b) having a 5% weight loss temperature (hereinafter, may be referred to as TG5), which is obtained by thermogravimetry under predetermined conditions, and with an inorganic material as a blending component (c) such that each component is blended at a predetermined proportion, when the resin composition for a sliding material is processed into a sliding member, the friction coefficient, the wear amount, and the linear expansion coefficient each have a value equal to or below a predetermined value, and eventually, satisfactory sliding performance could be obtained.

Furthermore, upon configuring the resin composition for a sliding material of the invention, it is preferable that a tensile modulus of the blending component (b) as measured according to JIS R 7606:2000 has a value within a range of 10 to 35 GPa.

In this way, by specifying the tensile modulus of the predetermined uncarbonized carbon fiber as the blending component (b) in the resin composition for a sliding material, when the resin composition for a sliding material is processed into a sliding member, the linear expansion coefficient could be equal to or below a predetermined value, and excellent sliding properties could be exhibited over a long period of time.

Furthermore, upon configuring the resin composition for a sliding material of the invention, it is preferable that a tensile elongation of the blending component (b) as measured according to JIS R 7606:2000 has a value within a range of 2 to 5%.

In this way, with regard to the resin composition for a sliding material, by specifying the tensile elongation of the predetermined uncarbonized carbon fiber as the blending component (b), when the resin composition for a sliding material is processed into a sliding member, the linear expansion coefficient could have a value equal to or below a predetermined value, and more excellent sliding properties could be exhibited over a long period of time.

Furthermore, upon configuring the resin composition for a sliding material of the invention, it is preferable that an amount of carbon on a surface of the blending component (b) as determined by XPS elemental analysis has a value within a range of 85 to 96% by weight with respect to a total amount.

In this way, with regard to the resin composition for a sliding material, by specifying the amount of carbon of the blending component (b) to a value within a predetermined range, when the resin composition for a sliding material is processed into a sliding member, the sliding member could exhibit excellent sliding properties over a long period of time in a more quantifiable manner.

Furthermore, upon configuring the resin composition for a sliding material of the invention, it is preferable that when the resin composition for a sliding material is processed into a sliding member, the sliding member has a linear expansion coefficient of 5×10⁻⁵/°C or less as measured according to JIS K 7197:2012.

In this way, by adjusting the linear expansion coefficient to a predetermined value or less in a sliding member derived from the resin composition for a sliding material, a sliding member that easily and stably adapts to various use applications in a more quantifiable manner could be obtained.

Furthermore, upon configuring the resin composition for a sliding material of the invention, it is preferable that a weight ratio of blending component (b)/blending component (c) has a value within a range of 1/1 to 10/1.

In this way, by limiting the weight ratio of blending component (b)/blending component (c) in the resin composition for a sliding material, when the resin composition is processed into a sliding member, the friction coefficient and the linear expansion coefficient are more easily adjusted to values equal to or below predetermined values.

Upon configuring the resin composition for a sliding material of the invention, it is preferable that the blending component (a) is at least one selected from the group consisting of a polyphenylene sulfide resin, a polyether sulfone resin, a polyether ether ketone resin, a polyimide resin, and a thermosetting phenol resin.

In this way, by specifying the kind of the blending component (a), heat resistance could be improved, and the linear expansion coefficient could be lowered.

Therefore, by limiting the kind of the resin component, when the resin composition for a sliding material is processed into a sliding member, the sliding member has satisfactory heat resistance and processability, and could also stably exhibit excellent performance for a long period of time, with the friction coefficient and the linear expansion coefficient being equal to or below predetermined values.

Another aspect of the invention is a sliding member having a linear expansion coefficient of 5×10⁻⁵/°C or less as measured according to JIS K 7197:2012, the sliding member being derived from a resin composition for a sliding material including the following blending components (a) to (c) :
(a) 100 parts by weight of a resin component;
(b) 10 to 400 parts by weight of uncarbonized carbon fiber having a 5% weight loss temperature of 400 to 550°C; and
(c) 10 to 80 parts by weight of an inorganic material.

In this way, by producing a sliding member derived from a resin composition for a sliding material in which uncarbonized carbon fiber as the blending component (b) having a 5% weight loss temperature as determined by thermogravimetry in a predetermined range, and the like are blended with the resin component as the blending component (a), the sliding member has a small linear expansion coefficient and could exhibit excellent sliding properties over a long period of time.

### BRIEF DESCRIPTION OF DRAWINGS

Figs. 1A to 1C are figures provided to describe the relationships between the firing temperature of carbon fiber and the linear expansion coefficient, the friction coefficient, and the wear amount of a sliding member, respectively;
Fig. 2 is a figure provided to describe the relationship between the firing temperature of carbon fiber and the 5% weight loss temperature (TG5) of carbon fiber;
Figs. 3A and 3B are figures provided to describe the relationships between the firing temperature of carbon fiber and the tensile modulus and the tensile elongation of carbon fiber, respectively;
Fig. 4 is a figure provided to describe the relationship between the firing temperature of carbon fiber and the volume resistivity (logarithmic notation) of carbon fiber;
Figs. 5A to 5C are figures provided to describe the relationships between the blending amount of uncarbonized carbon fiber and the linear expansion coefficient, the friction coefficient, and the wear amount of a sliding member, respectively;
Figs. 6A to 6C are figures provided to describe the relationships between the weight ratio of uncarbonized carbon fiber as the blending component (b)/inorganic material as the blending component (c), and the linear expansion coefficient, the friction coefficient, and the wear amount of a sliding member, respectively; and
Fig. 7A, which corresponds to Example 1 of the invention, and Fig. 7B, which corresponds to Comparative Example 2 of the invention, are each a cross-sectional photograph (magnification: 500) provided to describe the dispersed state of the blending component (b) Of a resin composition for a sliding material.

### MODE(S) FOR CARRYING OUT THE INVENTION

### [First embodiment]

A first embodiment is a resin composition for a sliding material, containing the following blending components (a) to (c):
(a) 100 parts by weight of a resin component;
(b) 10 to 400 parts by weight of uncarbonized carbon fiber having a 5% weight loss temperature of 400 to 550°C; and
(c) 10 to 80 parts by weight of an inorganic material.

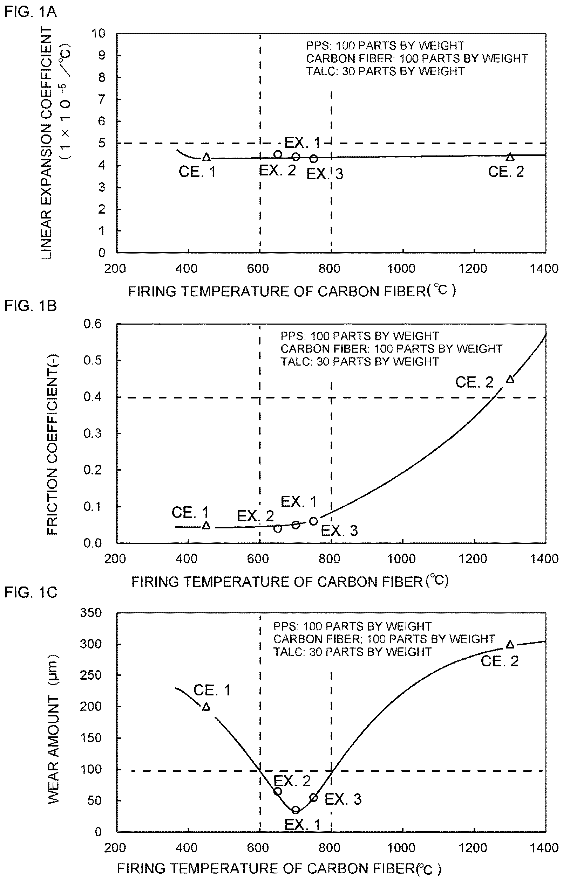

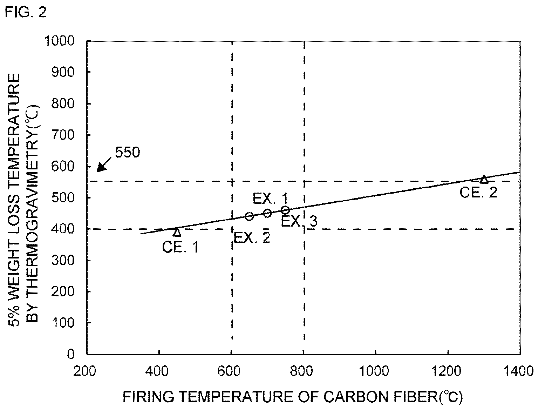

That is, as shown in Figs. 1A to 1C, the first embodiment is a resin composition for a sliding material obtained by a blending carbon fiber (uncarbonized carbon fiber) having a predetermined 5% weight loss temperature (TG5) as measured by a thermogravimetric analyzer (TGA) as shown in Fig. 2, so that the linear expansion coefficient, the friction coefficient, and the wear amount of a sliding member derived from the resin composition for a sliding material.

Further, the first embodiment is a resin composition for a sliding material obtained by blending a predetermined amount of the uncarbonized carbon fiber as a blending component (b), together with an inorganic material as a blending component (c), with respect to a resin component as a blending component (a).

The resin composition for a sliding material of the first embodiment will be described more specifically below, focusing on the blending components (a) to (c) constituting the resin composition for a sliding material, with reference to the drawings as appropriate.

### 1. Blending component (a)

### (1) Kind

The kind of the resin component as the blending component (a) is not particularly limited, and any known resin component used for sliding members could be suitably used.

More specifically, among such known resin components, the resin component is preferably at least one heat-resistant resin selected from the group consisting of a polyphenylene sulfide resin (PPS), a polyether sulfone resin (PES), a polyether ether ketone resin (PEEK), a polyimide resin (PI), and a thermosetting phenol resin (PF) .

The reason for this is that these heat-resistant resins usually have heat resistance for a continuous use time of, for example, 40000 hours at a continues use temperature of 150°C or higher. Therefore, even in a case where the environment temperature has risen, satisfactory mechanical strength, sliding properties, and the like could be maintained over time.

In addition, it is because since these heat-resistant resins have relatively low water absorbency, even when these heat-resistant resins are used for a sliding member or the like of a submersible pump, the dimensional change of the sliding member (slide bearing or the like) is small, and satisfactory sliding properties are exhibited.

The resin component (heat-resistant resin) as the blending component (a) may be used as a main component, and as a measure, for example, the content of the resin component is preferably 50% by weight or more, more preferably 70% by weight or more, and even more preferably 90% by weight or more, when the total amount of the resin component is taken as 100% by weight.

Furthermore, among these heat-resistant resins as the blending component (a), a polyphenylene sulfide resin (also including modified polyphenylene sulfide resins; hereinafter, may be simply referred to as PPS resin) is a more suitable resin component.

The reason for this is that a PPS resin is usually a crystalline, semi-transparent thermoplastic resin and usually has a high melting point of about 280°C and a high glass transition point of 93°C as well as extremely high rigidity, excellent heat resistance, dimensional stability, wear resistance, low water absorbency, and the like.

Furthermore, it is because a PPS resin has low melt viscosity and has excellent productivity from the viewpoint that large quantities of uncarbonized carbon fiber and inorganic materials could be added.

In addition, it is because PPS resins are available as a crosslinked polymer, a linear polymer, and a semi-linear polymer depending on their molecular structures, and each kind of PPS resins could be used singly or in combination of two or more kinds thereof.

Among PPS resins, particularly a tough linear polymer is preferred in order to produce a slide bearing that takes into consideration of abrasive wear modes such as a water-depleted state in which no water film is formed, and a state in which foreign matter is caught between the bearings.

### (2) Blending amount

The blending amount of the resin component as the blending component (a) could be determined while taking into consideration of the heat resistance, moldability, mechanical strength, and the like of the resulting sliding member; however, usually, it is preferable that the blending amount of the blending component (a) has a value within the range of 10 to 80% by weight when the total amount (100% by weight) of the resin composition for a sliding material is taken.

The reason for this is that when the blending amount of the blending component (a) is below 10% by weight, as the blending amounts of uncarbonized carbon fiber (for example, a product fired at 600 to 800°C) as the blending component (b) and an inorganic material (talc or the like) as the blending component (c) become large, the melt viscosity of the resin composition for a sliding material becomes excessively high, molding processability is deteriorated, and it may be difficult to obtain a sliding member that exhibits excellent sliding properties and the like.

On the other hand, it is because when the blending amount of the blending component (a) is more than 80% by weight, the blending amounts of uncarbonized carbon fiber as the blending component (b) and an inorganic material as the blending component (c) are reduced, so that it may be difficult to adjust the linear expansion coefficient of the resulting sliding member, or the mechanical strength and the like may be notably decreased, and thus there are occasions in which excellent sliding properties could not be exhibited.

Therefore, it is more preferable that the blending amount of the blending component (a) has a value within the range of 15 to 60% by weight, and even more preferably a value within the range of 20 to 50% by weight, with respect to the total amount of the resin composition for a sliding material.

### 2. Blending component (b)

### (1) 5% weight loss temperature determined by thermogravimetry

With regard to the predetermined uncarbonized carbon fiber as the blending component (b), the 5% weight loss temperature (hereinafter, may be simply referred to as TG5) that is measured using TGA under the conditions of an air flow rate of 100 ml/min and a temperature increase rate of 5°C/min, has a value within the range of 400 to 550°C.

The reason for this is that when the TG5 is lower than 400°C, the heat resistance, mechanical strength, and the like are excessively decreased, and when the resin composition for a sliding material is processed into a sliding member, durability is notably deteriorated.

On the other hand, it is because when the TG5 exceeds 550°C, the heat resistance, mechanical strength, and the like of the resin composition for a sliding material itself are improved; however, when the resin composition is processed into a sliding member, the friction coefficient increases.

Therefore, it is more preferable that the TG5 of the uncarbonized carbon fiber has a value within the range of 430 to 500°C, and even more preferably a value within the range of 450 to 490°C.

The TG5 can be measured by taking the temperature at which the weight is reduced by 5% by weight from the initial weight (100% by weight) in a weight loss chart obtained using a TGA, as a measure.

Furthermore, the TG5 of the uncarbonized carbon fiber could be basically limited to a value within a predetermined range by limiting the firing temperature to a relatively low value.

That is, the carbonized product described in Patent Document 1 and the like of the prior art is a carbon fiber obtained by firing at least 1000°C or higher, and preferably at 1300 to 1500°C, and it has been separately found that the TG5 exceeds 700°C.

Furthermore, it has been separately found that the uncarbonized carbonaceous fiber described in Patent Document 2 of the prior art is fired at a temperature of 500°C or lower; however, the degree of carbonization is considerably low, and the TG5 is lower than 400°C.

Therefore, it could be said that upon producing a predetermined uncarbonized carbon fiber as the blending component (b), it is usually preferable to set the firing temperature to be within the range of 600 to 800°C.

Therefore, the TG5 of the predetermined uncarbonized carbon fiber as the blending component (b) is, in terms of the degree of carbonization, higher than that of uncarbonized carbonaceous fiber fired at a temperature of 500°C or lower while is lower than that of a carbonized product fired at a temperature of 1000°C or higher, and the uncarbonized carbon fiber is a low-temperature carbonized material that is clearly distinguished from these carbon fibers.

That is, the uncarbonized carbon fiber of the blending component (b) could be clearly distinguished from uncarbonized carbonaceous fiber (low-temperature carbonized material) and carbonized products because significant differences in properties could be seen in the tensile modulus, tensile elongation, surface elemental analysis (amount of carbon) by XPS, volume resistivity, saturated moisture percentage, and the like.

Here, referring to Fig. 2, the relationship between the firing temperature of carbon fiber (including uncarbonized carbon fiber and other carbon fiber; hereinafter, the same applies) and the 5% weight loss temperature (TG5) determined by TGA, which is one of thermal decomposition temperatures of carbon fiber, will be described.

That is, the axis of abscissa in Fig. 2 represents the firing temperature (°C) of carbon fiber, and the axis of ordinate represents the value of TG5 (°C) of the carbon fiber.

The characteristic curve in Fig. 2 is based on the results related to the TG5 of the carbon fibers used in Examples 1 to 3 and Comparative Examples 1 and 2, in which only the firing temperature was different, as will be described below.

Furthermore, in the figure, Example 1 is described as EX. 1, Comparative Example 1 is described as CE1, and the same applies hereinafter.

As can be understood from the characteristic curve in Fig. 2, as the firing temperature of the carbon fiber is lower, the value of TG5 tends to be lower accurately correspondingly, that is, the values tend to be proportional.

More specifically, when the firing temperature of the carbon fiber exceeds 1200°C, the TG5 exceeds 550°C; however, when the firing temperature of the carbon fiber is 600 to 800°C, the TG5 has a value within the range of 400 to 550°C, while when the firing temperature of the carbon fiber is lower than 600°C, the TG5 may be lower than 400°C.

Therefore, by adjusting the firing temperature of the carbon fiber to a predetermined range by judging from the results of the characteristic curve shown in Fig. 2, it could be said that the TG5 of the carbon fiber could be accurately controlled to a predetermined temperature.

### (2) Morphology

Furthermore, the average fiber diameter (average diameter) of the uncarbonized carbon fiber of the blending component (b) usually has a value of 30 µm or less, preferably a value within the range of 3 to 25 µm, and more preferably a value within the range of 5 to 20 µm, and the average fiber diameter could be appropriately determined according to the use application, ease of use, and the like.

Similarly, the average length of the uncarbonized carbon fiber of the blending component (b) usually has a value of 500 µm or less, preferably a value within the range of 50 to 450 µm, and more preferably a value within the range of 100 to 400 µm; however, even this could be appropriately determined according to the use application, ease of use, and the like.

### (3) Tensile modulus

Furthermore, it is preferable that the tensile modulus of the uncarbonized carbon fiber of the blending component (b) usually has a value within the range of 10 to 35 GPa.

The reason for this is that when the tensile modulus has a value of below 10 GPa, in a case where the resin composition for a sliding material is processed into a sliding member, the mechanical strength and wear resistance may be notably deteriorated.

On the other hand, it is because when the tensile modulus exceeds 35 GPa, the friction coefficient of the resulting sliding member may be increased.

Therefore, it is more preferable that the tensile modulus of the blending component (b) has a value within the range of 13 to 30 GPa, and even more preferably a value within the range of 16 to 25 GPa.

The tensile modulus of the uncarbonized carbon fiber can be measured according to JIS R 7606:2000.

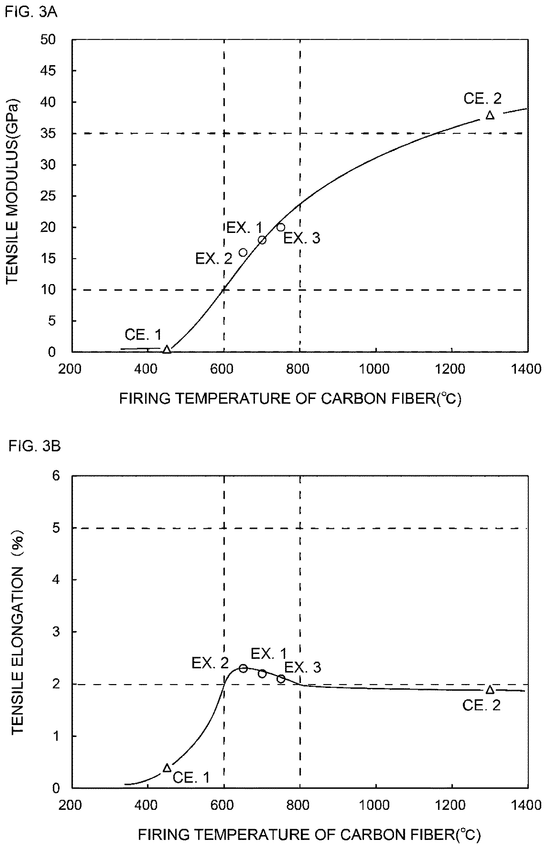

Here, referring to Fig. 3A, the relationship between the firing temperature and the tensile modulus of carbon fiber (including uncarbonized carbon fiber and other carbon fiber) will be described.

That is, the axis of abscissa in Fig. 3A represents the firing temperature (°C) of carbon fiber, and the axis of ordinate represents the value of tensile modulus (GPa) of the carbon fiber.

The characteristic curve in Fig. 3A is based on the tensile moduli of the carbon fibers used in Examples 1 to 3 and Comparative Examples 1 and 2, in which only the firing temperature was different, as will be described below.

As can be understood from the characteristic curve in Fig. 3A, as the firing temperature of carbon fiber is higher, the value of the tensile modulus of the carbon fiber tends to be remarkably high.

More specifically, when the firing temperature of carbon fiber is lower than 600°C, the tensile modulus is below 10 GPa, and in a case where the firing temperature of carbon fiber is 450°C, the tensile modulus has a considerably low value of below 1 GPa.

Furthermore, it has been found that when the firing temperature of carbon fiber is 600 to 800°C, the tensile modulus obtains a value of at least 10 GPa or more, and when other production conditions (stretching conditions and firing time) and the like are changed, a value of about 35 GPa at the maximum is obtained.

Furthermore, when the firing temperature of carbon fiber exceeds 1200°C, the tensile modulus has a value of above 35 GPa.

Therefore, it could be said that the tensile modulus of the carbon fiber could be reliably controlled to a value within a desired range by adjusting the firing temperature of carbon fiber to a predetermined range.

### (4) Tensile elongation

Furthermore, it is preferable that the tensile elongation of the uncarbonized carbon fiber as the blending component (b) usually has a value within the range of 2 to 5%.

The reason for this is that when the tensile elongation has a value of below 2%, the friction coefficient of the resulting sliding member may be increased.

On the other hand, it is because when the tensile elongation exceeds 5%, in a case where the resin composition for a sliding material is processed into a sliding member, the mechanical strength and wear resistance may be notably decreased.

Therefore, it is more preferable that the tensile elongation has a value within the range of 2.1 to 4%, and even more preferably a value within the range of 2.2 to 3%.

The tensile elongation of the uncarbonized carbon fiber can be measured according to JIS R 7606:2000.

Here, referring to Fig. 3B, the relationship between the firing temperature and the tensile elongation of carbon fiber (including uncarbonized carbon fiber and other carbon fiber) will be described.

That is, the axis of abscissa in Fig. 3B represents the firing temperature (°C) of carbon fiber, and the axis of ordinate represents the value of tensile elongation (%) of the carbon fiber.

The characteristic curve in Fig. 3B is based on the tensile elongation of the carbon fibers used in Examples 1 to 3 and Comparative Examples 1 and 2, in which only the firing temperature was different, as will be described below.

As can be understood from the characteristic curve described in Fig. 3(b), when the firing temperature of carbon fiber is lower than at least 600°C, as the firing temperature is lower, the value of tensile elongation of the carbon fiber tends to be markedly small.

More specifically, when the firing temperature of carbon fiber is lower than 600°C, the tensile elongation has a value significantly below 2%.

Furthermore, it has been found that when the firing temperature of carbon fiber is 600 to 800°C, the tensile elongation acquires a value of at least 2% or more, and when other production conditions (stretching conditions and firing time) and the like are changed, a value of 5% at the maximum is obtained.

In addition, when the firing temperature of carbon fiber exceeds 800°C, the tensile elongation has a small value of below 2%.

Therefore, it could be said that the value of tensile elongation of the carbon fiber could be accurately controlled to a value within a desired range by adjusting the firing temperature of carbon fiber to a predetermined range.

### (5) Surface elemental analysis by XPS (amount of carbon)

It is preferable that the amount of carbon determined by XPS elemental analysis on the surface of the uncarbonized carbon fiber as the blending component (b) has a value within the range of 85 to 96% by weight with respect to 100% by weight of the total amount.

The reason for this is that by specifying the amount of carbon at the surface as determined by XPS elemental analysis to a value within a predetermined range, unlike conventional carbonized products and uncarbonized carbonaceous fibers, a resin composition for a sliding material that gives, when processed into a sliding member, a friction coefficient, a wear amount, and a linear expansion coefficient that are each equal to or less than a predetermined value, could be provided more easily and stably.

More specifically, it is because when the amount of carbon determined by XPS elemental analysis has a value of below 85% by weight, the mechanical strength, wear resistance, and the like of the sliding member may be notably decreased.

On the other hand, it is because when the amount of carbon determined by XPS elemental analysis has a value exceeding 96% by weight, the friction coefficient may be increased.

Therefore, it is more preferable that the amount of carbon determined by XPS elemental analysis has a value within the range of 86 to 95% by weight, and even more preferably a value within the range of 88 to 94% by weight, with respect to the total amount.

The amount of carbon can be measured according to an XPS elemental analysis method, based on a calibration curve for carbon element.

### (6) Volume resistivity

Furthermore, it is preferable that the volume resistivity of the uncarbonized carbon fiber as the blending component (b) usually has a value within the range of 1×10⁰ to 1×10⁴ ohm·cm.

The reason for this is that by specifying the volume resistivity to a value within a predetermined range, when the resin composition for a sliding material is processed into a sliding member, unlike conventional carbonized products and uncarbonized carbonaceous fibers, a sliding member having excellent electrical insulation properties, antistatic properties, and the like could be more easily and stably provided in a quantifiable manner.

More specifically, it is because when the volume resistivity has a value of below 1×10⁰ ohm·cm, the antistatic properties are improved; however, the electrical insulation properties of the sliding member are insufficient, and there may be problems such as sparks to the outside.

On the other hand, it is because when the volume resistivity has a value exceeding 1×10⁴ ohm·cm, the electrical insulation properties are improved; however, in contrast, static electricity may accumulate in the sliding member, and the antistatic properties may be insufficient.

Therefore, it is more preferable that the volume resistivity of the uncarbonized carbon fiber has a value within the range of 5×10° to 5×10³ ohm·cm, and even more preferably a value within the range of 1×10¹ to 1×10³ ohm·cm.

The volume resistivity of the uncarbonized carbon fiber can be measured according to a four-terminal method, using a commercially available digital voltmeter or the like.

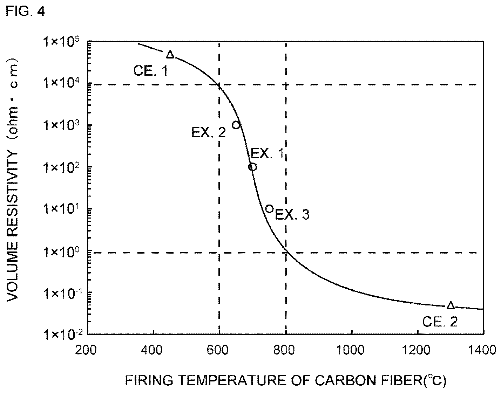

Here, referring to Fig. 4, the relationship between the firing temperature and the volume resistivity of carbon fiber (including uncarbonized carbon fiber and other carbon fiber).

That is, the axis of abscissa in Fig. 4 represents the firing temperature (°C) of carbon fiber, and the axis of ordinate represents the value of volume resistivity (ohm·cm) of the carbon fiber.

The characteristic curve in Fig. 4 is based on the volume resistivity of the carbon fibers used in Examples 1 to 3 and Comparative Examples 1 and 2, in which only the firing temperatures for the carbon fibers were different.

As can be understood from the characteristic curve in Fig. 4, as the firing temperature of carbon fiber is higher, the volume resistivity tends to decrease rapidly.

More specifically, when the firing temperature of the carbon fiber is lower than 600°C, the volume resistivity has a value significantly exceeding 1×10⁴ ohm·cm.

Furthermore, when the firing temperature of the carbon fiber is 600 to 800°C, the volume resistivity acquires a value within the range of 1×10⁰ to 1×10⁴ ohm·cm.

In addition, when the firing temperature of the carbon fiber exceeds 1200°C, the volume resistivity has a small value of below 1×10⁻¹ ohm·cm.

Therefore, it could be said that the value of the volume resistivity could be accurately controlled to a value within a predetermined range by adjusting the firing temperature of the carbon fiber to a predetermined range, and moreover, handling is facilitated, while desired antistatic properties and the like are obtained in a predetermined sliding member.

### (7) Saturated moisture percentage

The saturated moisture percentage of the uncarbonized carbon fiber as the blending component (b) can be measured according to JIS K 7209:2000, in which a method for determining the water absorption rate in plastics is specified; however, it is preferable that the saturated moisture percentage of the uncarbonized carbon fiber usually has a value within the range of 1 to 8% by weight.

The reason for this is that by specifying the saturated moisture percentage to a value within a predetermined range, when the resin composition for a sliding material is processed into a sliding member and used as a bearing for a submersible pump or the like, excellent sliding properties and the like are acquired more easily in a quantifiable manner over a long period of time.

More specifically, it is because when the saturated moisture percentage has a value of below 1% by weight, it may be difficult for the sliding member to exhibit excellent sliding properties and the like.

On the other hand, it is because when the saturated moisture percentage has a value of more than 8% by weight, the dimensional change caused by water absorption becomes large, and it may be difficult for the sliding member to maintain dimensional accuracy.

Therefore, it is more preferable that the saturated moisture percentage has a value within the range of 1.5 to 7% by weight, and even more preferably a value within the range of 2 to 6% by weight.

The saturated moisture percentage is measured according to JIS K 7209:2000 and can be measured as a ratio of increased weight due to absorbed moisture with respect to the initial weight.

### (8) Blending amount

It is also preferable that the blending amount of the uncarbonized carbon fiber as the blending component (b) usually has a value within the range of 10 to 400 parts by weight with respect to 100 parts by weight of the resin component as the blending component (a).

The reason for this is that by specifying the blending amount of the uncarbonized carbon fiber as the blending component (b) to a value within a predetermined range, a resin composition for a sliding material which, when processed into a sliding member, has a friction coefficient, a wear amount, and a linear expansion coefficient that are equal to or below predetermined values, could be provided more easily and stably.

More specifically, it is because when the blending amount of the uncarbonized carbon fiber has a value of below 10 parts by weight, when the resin composition for a sliding material is processed into a sliding member, it may be difficult to adjust the value of the linear expansion coefficient to a predetermined range, or the wear resistance may be deteriorated, and the wear amount may be increased.

On the other hand, it is because when the blending amount of the uncarbonized carbon fiber has a value of more than 400 parts by weight, when the resin composition for a sliding material is processed into a sliding member, it may be difficult to adjust the value of the friction coefficient to be within a predetermined range, or the molding processability at the time of being processed into a sliding member may be notably deteriorated.

Therefore, it is more preferable that the blending amount of the uncarbonized carbon fiber has a value within the range of 30 to 300 parts by weight, and even more preferably a value within the range of 50 to 200 parts by weight.

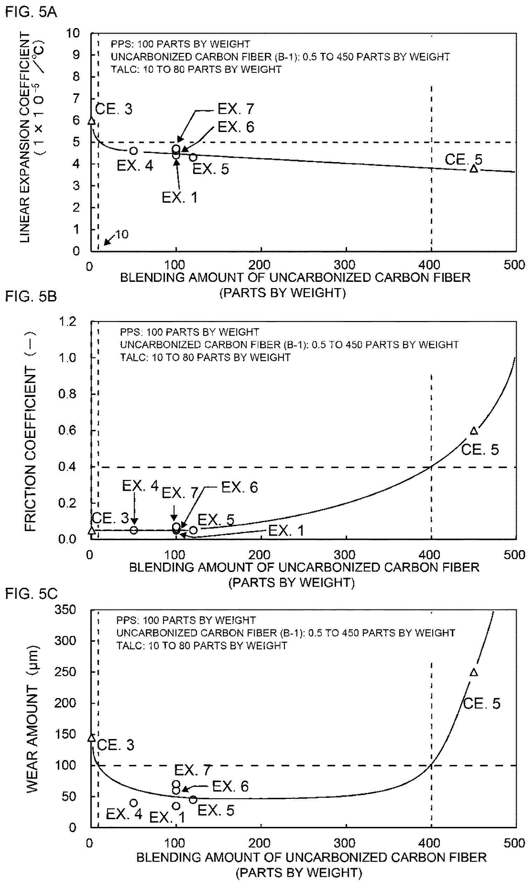

Here, referring to Fig. 5A, the relationship between the blending amount of uncarbonized carbon fiber and the linear expansion coefficient in a case where the resin composition for a sliding material is processed into a sliding member, as measured according to JIS K 7197:2012 (hereinafter, may be simply referred to as linear expansion coefficient), will be described.

That is, the axis of abscissa in Fig. 5A represents the blending amount (parts by weight) of uncarbonized carbon fiber with respect to 100 parts by weight of the resin component as the blending component (a), and the axis of ordinate represents the linear expansion coefficient (1×10⁻⁵/°C) obtained when the resin composition for a sliding material conforming to Example 1 or the like that will be described below is processed into a sliding member.

The characteristic curve in Fig. 5A is based on the linear expansion coefficients of the sliding members of Examples 1 and 4 to 7 and Comparative Examples 3 and 5, in which the kinds of the blending components (a) to (c) and the blending amount of the blending component (a) are the same, and the blending amount of the blending component (c) has a value within the range of 10 to 80 parts by weight.

As can be understood from the characteristic curve described in Fig. 5A, it is understood that as the blending amount of the uncarbonized carbon fiber is larger, the linear expansion coefficient tends to be slightly smaller.

More specifically, when the blending amount of the uncarbonized carbon fiber is below 10 parts by weight, the linear expansion coefficient has a value exceeding 5×10⁻⁵/°C; however, when the blending amount is 10 parts by weight or more, the linear expansion coefficient tends to have a value of 5×10⁻⁵/°C or less.

When the blending amount of the uncarbonized carbon fiber exceeds 400 parts by weight, the linear expansion coefficient has a value of about 4×10⁻⁵/°C or less.

Therefore, it is understood that the value of the linear expansion coefficient in the sliding member could be adjusted with high precision by controlling the blending amount of the uncarbonized carbon fiber to a predetermined range.

Next, referring to Fig. 5B, the relationship between the blending amount of uncarbonized carbon fiber and the friction coefficient in a case where the resin composition for a sliding material is processed into a sliding member, will be described.

That is, the axis of abscissa in Fig. 5B represents the blending amount (parts by weight) of uncarbonized carbon fiber with respect to 100 parts by weight of the resin component as the blending component (a), and the axis of ordinate represents the friction coefficient (-) obtained when the resin composition for a sliding material is processed into a sliding member according to Example 1 that will be described below.

The characteristic curve in Fig. 5B is based on the results related to the friction coefficients of Examples 1 and 4 to 7 and Comparative Examples 3 and 5, as in the case of Fig. 5A.

As can be understood from the characteristic curve described in Fig. 5B, as the blending amount of uncarbonized carbon fiber is larger, the friction coefficient tends to increase.

More specifically, when the blending amount of the uncarbonized carbon fiber exceeds 400 parts by weight, the friction coefficient has a value exceeding 0.4; however, when the blending amount is below 400 parts by weight, particularly 10 to 200 parts by weight, the friction coefficient obtains a low value of 0.1 or less.

Next, referring to Fig. 5C, the relationship between the blending amount of uncarbonized carbon fiber and the wear amount in a case where the resin composition for a sliding material is processed into a sliding member will be described.

That is, the axis of abscissa in Fig. 5C represents the blending amount (parts by weight) of uncarbonized carbon fiber with respect to 100 parts by weight of the resin component as the blending component (a), and the axis of ordinate represents the wear amount (µm) under predetermined conditions when the resin composition for a sliding material is processed into a sliding member according to Example 1 that will be described below.

The characteristic curve in Fig. 5C is based on the results related to the wear amounts of Examples 1 and 4 to 7 and Comparative Examples 3 and 5, as in the case of Fig. 5A.

As can be understood from the characteristic curve described in Fig. 5C, as the blending amount of uncarbonized carbon fiber becomes larger, the wear amount tends to decrease for the moment and then increase.

More specifically, when the blending amount of the uncarbonized carbon fiber is below 10 parts by weight, the wear amount has a value exceeding 100 µm; however, when the blending amount is below 400 parts by weight, particularly 10 to 200 parts by weight, the wear amount obtains a low value of 100 µm or less.

Therefore, by adjusting the blending amount of uncarbonized carbon fiber to a value within the range of 10 to 400 parts by weight, excellent sliding properties, that is, a low friction coefficient and a small value of wear amount, could be obtained while maintaining a low linear expansion coefficient in the sliding member, and moreover, the balance between the two could be further improved.

### 3. Blending component (c)

### (1) Kind

It is preferable that a predetermined amount of an inorganic material as the blending component (c) is blended, and that the mechanical strength and heat resistance, more particularly sliding properties, surface smoothness, and the like are improved in a sliding member obtained by subjecting the resin composition for a sliding material to predetermined processing.

More specifically, it is preferable that a predetermined amount of the inorganic material as the blending component (c) is blended, and the linear expansion coefficient and the like are decreased while the sliding properties and the like are improved for the sliding member.

Here, the kind of the inorganic material as the blending component (c) is not particularly limited; however, it is preferable to blend an inorganic material having a Mohs hardness of 6 or less.

More specifically, it is preferable to blend at least one of mica, talc, graphite, gypsum, kaolinite, zinc oxide, titanium oxide, zirconium oxide, and the like.

The reason for this is that since these inorganic materials have low hardness such as a Mohs hardness of 6 or less, when the resin composition for a sliding material is processed into a sliding member, the sliding resistance against the mating material could be reduced, and the friction coefficient could be kept low.

Furthermore, among these inorganic materials, talc, mica, graphite, gypsum, kaolinite, or a mixture thereof (for example, mixing weight ratio of talc/mica: 90/10 to 10/90), all of which have a Mohs hardness of below 4, is more suitable from the viewpoint that satisfactory sliding properties and the like could be exhibited even when the blending amount is a relatively small amount.

To speak further, when the blending component (c) is talc (mineral containing hydrous magnesium silicate: Mg₃Si₄O₁₀(OH)₂ as a main component), it is suitable from the viewpoint that the blending component (c) is relatively inexpensive and could be uniformly mixed with the resin component as the blending component (a).

Furthermore, when the blending component (c) is talc or the above-mentioned mixture of talc/mica, the apparent density is relatively uniform, and the value thereof is relatively low.

More specifically, in the case of talc or the like, it is preferable that the apparent density measured according to JIS K 5101-12:2004 has a value within the range of 0.1 to 0.8 g/ml, more preferably a value within the range of 0.2 to 0.7 g/ml, and even more preferably a value within the range of 0.3 to 0.6 g/ml.

In addition, it could be said that these inorganic materials are more suitable from the viewpoint that even when a sliding member is produced by injection molding, compression molding, or the like, a smooth surface is obtained without interfering with predetermined fluidity.

### (2) Average particle size

Furthermore, with regard to the inorganic material as the blending component (c), it is preferable that the average particle size measured according to JIS Z 8825:2013 (for example, D50 in a particle size distribution obtained by a laser diffraction method; hereinafter, the same) has a value within the range of 1 to 180 µm.

The reason for this is that when the average particle size is below 1 µm, the particles are likely to aggregate, handling may be difficult, and it may be difficult to uniformly mix the inorganic material with a resin component such as a PPS resin.

On the other hand, it is because when the average particle size is above 180 µm, when a sliding member is produced by injection molding, compression molding, or the like, it may be difficult to obtain a smooth surface.

Therefore, in the case of using an inorganic material such as talc as the blending component (c), it is more preferable that the average particle size has a value within the range of 10 to 110 µm, and even more preferably a value within the range of 15 to 40 µm.

The influence of the average particle size becomes more noticeable as the blending amount of the inorganic material as the blending amount of the inorganic material as the blending component (c) is larger with respect to 100 parts by weight of the resin component as the blending component (a).

### (3) Blending amount 1

The blending amount of the inorganic material as the blending component (c) usually has a value within the range of 10 to 80 parts by weight with respect to 100 parts by weight of the resin component as the blending component (a) .

The reason for this is that when the blending amount of the blending component (c) has a value of below 10 parts by weight, in a case where the resin composition for a sliding material is processed into a sliding member, it may be difficult to adjust the linear expansion coefficient and the like to predetermined numerical value ranges.

On the other hand, it is because when the blending amount of the blending component (c) has a value exceeding 80 parts by weight, the melt viscosity of the resin composition for a sliding material increase, and the molding processability at the time of being processed into a sliding member may be notably deteriorated.

Therefore, it is more preferable that the blending amount of the blending component (c) has a value within the range of 15 to 60 parts by weight, and even more preferably a value within the range of 20 to 50 parts by weight, with respect to 100 parts by weight of the resin component as the blending component (a).

### (4) Blending amount 2

Furthermore, it is also preferable to determine the blending amount of the inorganic material as the blending component (c) in relation to the blending amount of the uncarbonized carbon fiber as the blending component (b).

More specifically, it is preferable that the weight ratio of blending component (b)/blending component (c) (hereinafter, may be simply referred to as ratio of blending amounts b/c) has a value within the range of 1/1 to 10/1.

The reason for this is that by limiting the ratio of blending amounts b/c in the resin composition for a sliding material, when the resin composition for a sliding material is processed into a sliding member, the linear expansion coefficient, the friction coefficient, and the wear amount could be more easily adjusted to values equal to or less than the predetermined values.

More specifically, it is preferable that when the ratio of blending amounts b/c has a value of below 1/1, it may be difficult to adjust the linear expansion coefficient, the wear amount, and the like to predetermined numerical value ranges when the resin composition for a sliding material is processed into a sliding member.

On the other hand, it is because when the ratio of blending amounts b/c has a value of above 10/1, it may be difficult to adjust the friction coefficient, the wear amount, and the like to predetermined numerical value ranges when the resin composition for a sliding material is processed into a sliding member.

Therefore, it is more preferable that the ratio of blending amounts b/c has a value within the range of 1.5/1 to 8/1, and even more preferably a value within the range of 2/1 to 6/1.

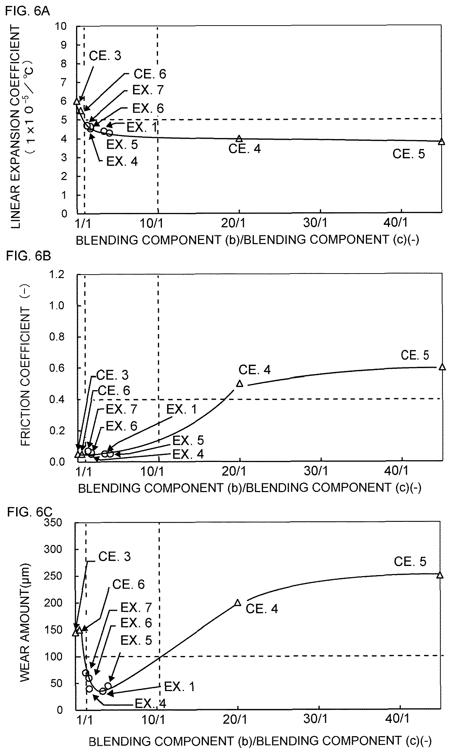

Here, referring to Fig. 6A, the relationship between the ratio of blending amounts b/c and the linear expansion coefficient will be described in relation to the blending amount of the inorganic material.

That is, the axis of abscissa in Fig. 6A represents the ratio of blending amounts, that is, blending component (b)/blending component (c) (-), and the axis of ordinate represents the linear expansion coefficient (1×10⁻⁵/°C) obtained when the resin composition for a sliding material is processed into a sliding member according to Example 1 that will be described below.

As will be described below, each data of the characteristic curve in Fig. 6A is based on the linear expansion coefficients of Examples 1 and 4 to 7 and Comparative Examples 3 to 6, in which the kind and blending amount of the resin component as the blending component (a) are the same, and the kinds of the uncarbonized carbon fiber as the blending component (b) and the inorganic material as the blending component (c) are respectively the same.

As can be understood from the characteristic curve in Fig. 6A, as the value of the ratio of blending amounts b/c is larger, a tendency that the linear expansion coefficient is decreased and stabilized could be seen.

More specifically, when the ratio of blending amounts b/c is close to 0/1, the linear expansion coefficient is about 6×10⁻⁵/°C, and when the ratio of blending amounts b/c is about 1/1, the linear expansion coefficient rapidly decreases and has a value of 5×10⁻⁵/°C or less.

Furthermore, when the ratio of blending amounts b/c is about 10/1, the linear expansion coefficient obtains a value of about 4×10⁻⁵/°C.

However, when the ratio of blending amounts b/c is above 10/1 and reaches up to about 40/1, the linear expansion coefficient tends to slightly decrease, but has a value roughly within the range of 3.5×10⁻⁵ to 4×10⁻⁵/°C or less.

Therefore, upon determining the blending amount of the inorganic material as the blending component (c), it could be said that when the ratio of blending amounts b/c has a value within the range of, for example, 1/1 to 10/1, the linear expansion coefficient in the sliding member could be accurately adjusted to a desired range.

Referring to Fig. 6B, the relationship between the ratio of blending amounts b/c and the friction coefficient in a case where the resin composition for a sliding material is processed into a sliding member will be described in relation to the blending amount of the inorganic material.

That is, the axis of abscissa in Fig. 6B represents the ratio of blending amounts, that is, blending component (b)/blending component (c) (-), and the axis of ordinate represents the friction coefficient (-) obtained when the resin composition for a sliding material is processed into a sliding member according to Example 1 that will be described below.

Each data of the characteristic curve in Fig. 6B is based on the friction coefficients of Examples 1 and 4 to 7 and Comparative Examples 3 to 6, as in the case of Fig. 6A.

As can be understood from the characteristic curve in Fig. 6B, as the ratio of blending amounts b/c is larger, the friction coefficient tends to increase.

More specifically, when the ratio of blending amounts b/c is close to 0/1, the friction coefficient is about 0.05; however, when the ratio of blending amounts b/c is about 1/1, although there is some variation depending on the general conditions, the friction coefficient is about above 0.05, and when the ratio of blending amounts b/c is about 10/1, the friction coefficient gradually increases and obtains a value of 0.2 or less.

Referring to Fig. 6C, the relationship between the ratio of blending amounts b/c and the wear amount in the case where the resin composition for a sliding material is processed into a sliding member will be described in relation to the blending amount of the inorganic material.

That is, the axis of abscissa in Fig. 6C represents the ratio of blending amounts, that is, blending component (b)/blending component (c) (-), and the axis of ordinate represents the wear amount (µm) under predetermined conditions when the resin composition for a sliding material is processed into a sliding member according to Example 1 that will be described below.

Each data of the characteristic curve in Fig. 6C is based on the wear amounts of Examples 1 and 4 to 7 and Comparative Examples 3 to 6, as in the case of Fig. 6A.

As can be understood from the characteristic curve in Fig. 6C, as the ratio of blending amounts b/c increases, the wear amount tends to decrease for the moment and then increase.

More specifically, when the ratio of blending amounts b/c is close to 0/1, the wear amount is about 150 µm; however, when the ratio of blending amounts b/c is about 1/1, the wear amount decreases to be below 100 µm, and then when the ratio of blending amounts b/c exceeds 10/1, the wear amount increases and reaches a value exceeding 100 µm.

Therefore, from Figs. 6A to 6C, it is understood that by adjusting the ratio of blending amounts b/c, excellent sliding properties, that is, a low friction coefficient and a small value of wear amount, could be obtained while maintaining a low linear expansion coefficient in a sliding member, and moreover, the balance between the two could be further improved.

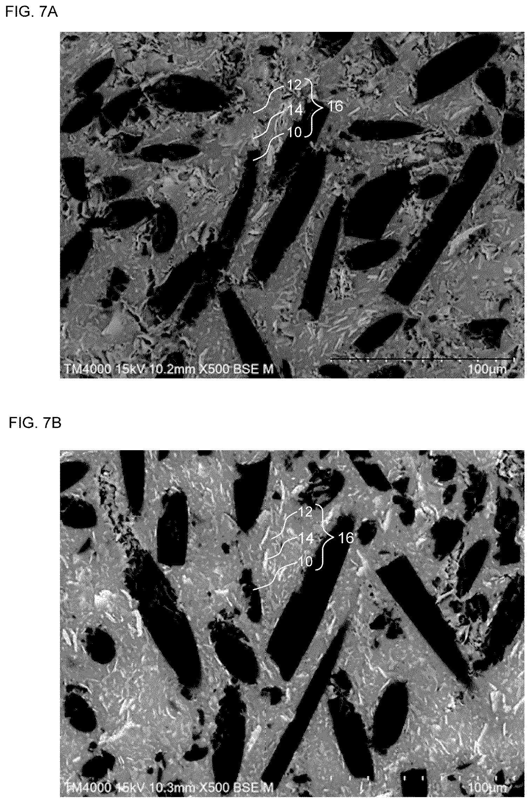

Fig. 7A and Fig. 7B are cross-sectional photographs of sliding members corresponding to Example 1 and Comparative Example 2 that will be described below.

In Fig. 7A, it is understood that a sliding member is configured to be derived from a resin composition for a sliding material 16 in which carbon fiber 10, which is a predetermined uncarbonized carbon fiber, is relatively uniformly dispersed inside a resin component 12 containing an inorganic material 14, not only in a predetermined direction but also in a direction orthogonally intersecting the predetermined direction.

On the other hand, in Fig. 7B as well, similarly, it is observed that strands of the carbon fiber 10 are uniformly dispersed.

That is, in the cross-sectional photographs of Fig. 7A and Fig. 7B, no difference is recognized in the uniform dispersion of the carbon fiber strands 10 due to the difference in the firing temperature of the carbon fiber 10, as well as in the amount of carbon or the like, and it is understood that the cross-sectional structures are in a similar state.

Therefore, from these results as well, it could be said that even when a predetermined uncarbonized carbon fiber is used, strands of the carbon fiber could be uniformly dispersed, and a low friction coefficient and a low value of wear amount are obtained while maintaining a low linear expansion coefficient in the sliding member.

### 4. Blending component (d)

### (1) Kind

It is preferable that a lubricating additive that is a compound different from the resin component of the blending component (a) as the blending component (d) and exhibits a lubricating effect.

The reason for this is that by blending such a lubricating additive, together with the blending component (a) to the blending component (c) constituting the resin composition for a sliding material, the lubricating additive could notably improve the sliding properties and the like in a sliding member obtained by processing.

The kind of the lubricating additive is not particularly limited as long as it is a compound that exhibits a predetermined lubricating effect; however, it is preferable that the lubricating additive is at least one of polytetrafluoroethylene (PTFE), perfluoroalkoxyalkane (PFA), an ethylene-tetrafluoroethylene copolymer (ETFE), a perfluoroethylene-propene copolymer (FEP), polyvinylidene fluoride (PVDF), silicone grease, silicone oil, silicone compound, and the like.

Furthermore, the above-mentioned fluororesins PTFE and ETFE are each preferable as the lubricating additive of the blending component (d), and PTFE in particular is suitable from the viewpoint that it has a low friction coefficient, exhibits a lubricating effect, and gives satisfactory wear resistance.

Furthermore, PTFE and the like are suitable from the viewpoint that they could be uniformly mixed and dispersed even when blended over a relatively wide range with a PPS resin or the like, which is the resin component of the blending component (a).

In addition, PTFE and the like are known to have various average particle sizes; however, it is preferable that the average particle size (for example, D50 in a particle size distribution obtained by a laser diffraction method) has a value within the range of 1 to 50 µm, more preferably a value within the range of 3 to 20 µm, and even more preferably a value within the range of 5 to 10 µm.

### (2) Blending amount

Furthermore, it is preferable that the blending amount of the lubricating additive as the blending component (d) usually has a value within the range of 10 to 80 parts by weight with respect to 100 parts by weight of the resin component as the blending component (a).

The reason for this is that when the blending amount of the blending component (d) has a value of below 10 parts by weight, even when the blending component (d) is added to a resin composition for a sliding material, an additive effect of imparting lubricity may not be exhibited.

On the other hand, it is because when the blending amount of the blending component (d) has a value exceeding 80 parts by weight, it may be difficult to adjust the linear expansion coefficient in a lubricating additive obtained by processing, to a value equal to or below a predetermined value.

Therefore, it is more preferable that the blending amount of the blending component (d) has a value within the range of 15 to 60 parts by weight, and even more preferably a value within the range of 20 to 40 parts by weight, with respect to 100 parts by weight of the resin component as the blending component (a).

### 5. Other blending components (e)

### (1) Kind

As blending components (e), it is also preferable to blend various additives for achieving various purposes, which are compounds other than the above-mentioned blending components (a) to (d).

For example, as a friction characteristics improver, it is preferable to blend at least one of a modified polyolefin resin; lubricating oils such as mineral oil, ester oil, and silicone oil; waxes such as polyethylene wax, oxidized polyethylene wax, ester wax, and partially saponified wax; and solid lubricants such as graphite, boron nitride, molybdenum disulfide, and tungsten disulfide.

Particularly, among oxidized polyethylene waxes, an oxidized polyethylene wax having a melting point of 120°C or higher is preferred from the viewpoint of contributing to uniform miscibility of various blending components even when a relatively small amount is blended, while maintaining mechanical strength, heat resistance, and the like of the sliding member, and further facilitating the adjustment of lubricity, moldability, and the like.

On the other hand, graphite is a suitable blending component (e) from the viewpoint that it is relatively easy to adjust lubricity, moldability, electrical conductivity, concealability, and the like by appropriately changing the blending amount and morphology (average particle size and scale shape) of graphite.

### (2) Blending amount

Furthermore, when graphite or the like is blended as the blending component (e), it is preferable that the blending amount thereof usually has a value within the range of 1 to 50 parts by weight with respect to 100 parts by weight of the resin component as the blending component (a) .

The reason for this is that although it depends on the kind of the blending component (e), when the blending amount has a value of below 1 part by weight, the blending effect, particularly the effect of lubricity and the like, may not be exhibited.

On the other hand, it is because when the blending amount of the blending component (e) has a value exceeding 50 parts by weight, it may be difficult to uniformly mix the blending component (e) with the resin component as the blending component (a), or conversely, it may be difficult to adjust lubricity, moldability, electrical conductivity, concealability, and the like.

Therefore, it is more preferable that the blending amount of the blending component (e) has a value within the range of 1.5 to 30 parts by weight, and even more preferably a value within the range of 2 to 10 parts by weight, with respect to 100 parts by weight of the resin component as the blending component (a).

### 6. Production method

It is preferable that the resin composition for a sliding material of the present invention is produced as a mixture with a mixing device such as a Henschel mixer, a super mixer, a ball mill, or a tumbler mixer, while weighing various blending components such that the blending amounts of the blending components in the resin composition are in predetermined ranges.

Next, when the resin component as the blending component (a) in the resin composition for a sliding material is a thermoplastic resin, it is preferable that the mixture is fed into a vented single-screw or twin-screw extruder or a non-vented single-screw or twin-screw extruder and melt-kneaded to be molded into a string-shaped molded product, and then the molded product is cut to produce particulate molding material pellets.

By making such molding material pellets, the resin composition for a sliding material could be molded into a desired shape such as a cylinder bush or a plate-shaped body by molding means such as an injection molding apparatus in the method for producing a sliding member that will be described below.

When the resin component as the blending component (a) of the resin composition for a sliding material is a thermosetting resin, it is preferable that the resin composition for a sliding material is produced into a mixture in the above-described mixing device, and then the mixture is charged into a mold for compression molding.

In this way, the resin composition for a sliding material that has been charged into a mold could be cured by applying heat and pressure with a heat pressing machine for a predetermined time, and after the compression molding, by drying the resin composition for a sliding material for a predetermined time in a drying furnace and sufficiently allowing a curing reaction to proceed, a desired sliding member could be obtained.

### [Second embodiment]

A second embodiment is a sliding member that has a linear expansion coefficient of 5×10⁻⁵/°C or less as measured according to JIS K 7197:2012, and is derived from a resin composition for a sliding material including the following blending components (a) to (c):
(a) 100 parts by weight of a resin component;
(b) 10 to 400 parts by weight of uncarbonized carbon fiber having a 5% weight loss temperature of 400 to 550°C; and
(c) 10 to 80 parts by weight of an inorganic material.

### 1. Basic configuration

A submersible pump is one example of a mechanical device or the like that uses the sliding member of the invention, and essentially submersible pumps of any configuration are suitable as long as they are submersible pumps that use a sliding member such as a slide bearing.

Therefore, for example, typically, a submersible pump having: 1) an impeller; 2) a shaft for fixing the impeller; 3) a slide bearing fixed to the impeller for supporting the impeller in a freely rotatable manner relative to the shaft; 4) a thrust-bearing member that slides against the respective end faces of the slide bearing; and 5) a casing and a cover that house the impeller and form a pump chamber, could be suitably applied.

### 2. Sliding member

### (1) Resin composition for a sliding material

The resin composition for a sliding material that is used for a sliding member of the second embodiment could be similar to the contents described in the first embodiment.

Therefore, duplicate description of the resin composition for a sliding material will not be repeated here.

### (2) Sliding member derived from resin composition for a sliding material

The basic configuration of a sliding member that includes uncarbonized carbon fiber and is obtained from a resin composition for a sliding material, is not particularly limited, and various modifications could be made therein.

That is, regarding the slide bearing, which is a sliding member that is provided to a submersible pump, at least one or a plurality of slide bearings may be provided; however, as a basic configuration, it is preferable that the slide bearing is a cylindrical-shaped bearing or flanged bearing that receives load on the inner diameter and the end faces and has the same thickness as the end faces.

Further, in addition to having absolutely low water absorbency, from the viewpoint of being capable of exhibiting toughness when the resin composition for a sliding material is processed into a sliding member, it is preferable that the sliding member is an injection molded article derived from a resin composition for a sliding material containing a linear polyphenylene sulfide resin as a base resin.

### 3. Production method

The method for producing a sliding member derived from a resin composition for a sliding material is not particularly limited; however, typically, it is preferable to use an injection molding method or a compression molding method.

### (1) Injection molding method

That is, according to an injection molding method, as an example, a predetermined sliding member could be produced by the following steps 1) to 5).
1) An injection molding apparatus is prepared.
2) A resin composition for a sliding material in the form of a molding material pellet is charged, while being weighed, into a hopper or the like of an injection molding apparatus.
3) The resin composition for a sliding material is brought into a molten state by a heating device of the injection molding apparatus.
4) The resin composition for a sliding material in a molten state is injection-molded into a predetermined mold by using the injection molding apparatus.
5) After cooling, a predetermined sliding member is taken out.

### (2) Compression molding method

According to a compression molding method, although this is another example, a predetermined sliding member could be produced by the following steps 1') to 4').
1') A predetermined molding die is prepared.
2') A resin composition for a sliding material as a mixture mixed by a mixing machine is charged into a predetermined place of a molding die.
3') The resin composition for a sliding material is cured by applying heat and pressure with a heat pressing machine for a certain period of time.
4') After the compression molding, the resultant is dried for a predetermined time in a drying furnace, and then a predetermined sliding member is taken out.

### 4. Property 1 (linear expansion coefficient)

The linear expansion coefficient for a sliding member can be measured using a thermomechanical analyzer (TMA) according to JIS K 7197:2012, under the following predetermined conditions.

That is, a square-shaped test piece having a thickness of 3 mm and a length of 5 mm on each side is produced by molding processing, the square-shaped test piece is heated from 25 to 100°C at a rate of 5°C/min using a TMA, the amount of change in the length of the square-shaped test piece is measured, and the linear expansion coefficient in the thickness direction (MD) of the resin at 35 to 80°C is determined as the linear expansion coefficient.

Usually, the linear expansion coefficient is preferably 5×10⁻⁵/°C or less.

The reason for this is that when the linear expansion coefficient exceeds 5×10⁻⁵/°C, the desired dimensional accuracy could not be maintained by sliding heat, and the sliding properties and durability in the sliding member may be notably deteriorated.

However, when the linear expansion coefficient is excessively small, the kind, morphology, blending amount, and the like of the resin component, inorganic material, uncarbonized carbon fiber, and the like that could be selected may be excessively limited.

Therefore, it is more preferable that the linear expansion coefficient of the sliding member has a value within the range of 1×10⁻⁵/°C to 4.8×10⁻⁵/°C, and even more preferably a value within the range of 2×10⁻⁵/°C to 4.6×10⁻⁵/°C.

Here, referring to Fig. 1A again, the relationship between the firing temperature of carbon fiber (including uncarbonized carbon fiber and other carbon fiber) and the linear expansion coefficient when a resin composition for a sliding material including the carbon fiber is processed into a sliding member, will be described.

That is, the axis of abscissa in Fig. 1A represents the firing temperature (°C) of carbon fiber, and the axis of ordinate shows the relationship with the linear expansion coefficient (1×10⁻⁵/°C) obtained when a resin composition for a sliding material prepared by blending carbon fiber that has been fired at a predetermined temperature, is processed into a sliding member.

Each data of the characteristic curve in Fig. 1A is based on the linear expansion coefficients of Examples 1 to 3 and Comparative Examples 1 and 2, in which the kinds and blending amounts of the blending components (a) to (c) are the same, and only the firing temperature of carbon fiber is different, as will be described below.

As can be understood from the characteristic curve described in Fig. 1A, it is understood that at the firing temperature (°C) of carbon fiber, there is no significant influence on the linear expansion coefficient in the sliding member.

### 5. Property 2 (friction coefficient)

Furthermore, the friction coefficient of the sliding member can be measured according to JIS K 7218:1986 using a thrust unidirectional rotation method under the following conditions.
Sliding speed: 90 m/min
Load (surface pressure): 10 kg/cm²
Testing time: 20 hours
Test piece: Square plate having a size of 30 mm (breadth) × 30 mm (horizontal width) × 3 mm (thickness)
Mating material: Hollow cylindrical shape (made of SUS304, inner diameter 20 mm, outer diameter 25.6 mm, length 15 mm, surface roughness Ra 0.1)
Lubrication conditions: No lubrication

It is usually suitable that the friction coefficient has a value of 0.4 or less.

The reason for this is that when the friction coefficient exceeds 0.4, the sliding properties and durability in the sliding member may be notably deteriorated.

Although it may vary depending on the purpose, morphology, and the like of the sliding member, it is more preferable that the friction coefficient has a value within the range of 0.01 to 0.2, and even more preferably a value within the range of 0.03 to 0.1.

Fig. 1B is a figure for describing the relationship between the firing temperature of carbon fiber (including uncarbonized carbon fiber and other carbon fiber) and the friction coefficient in a case where a resin composition for a sliding material including the carbon fiber is processed.

That is, the axis of abscissa in Fig. 1B represents the firing temperature (°C) of carbon fiber, and the axis of ordinate shows the relationship with the friction coefficient (-) obtained when a resin composition for a sliding material prepared by blending carbon fiber that has been fired at a predetermined temperature, is processed into a sliding member.

Each data of the characteristic curve in Fig. 1B is based on the friction coefficients of Examples 1 to 3 and Comparative Examples 1 and 2, in which the kinds and blending amounts of the blending components (a) to (c) are the same, and only the firing temperature of carbon fiber is different, as will be described below.

As can be understood from the characteristic curve described in Fig. 1B, as the firing temperature of the carbon fiber is lower, the friction coefficient in the sliding member tends to decrease.

More specifically, it is understood that when the firing temperature of the carbon fiber is about 1250°C, the friction coefficient in the sliding member could be adjusted to a value of 0.4 or less, and when the firing temperature of the carbon fiber is about 800°C, the friction coefficient could be adjusted to a value of about 0.1.

### 6. Property 3 (endurance time)

Furthermore, the endurance time as a measure for the sliding properties of a sliding member can be measured using the above-mentioned thrust unidirectional rotation method.

Usually, as a measure for satisfactory sliding properties, it is suitable that the endurance time of the sliding member is 10 hours or longer.

Although it may vary depending on the purpose, morphology, and the like of the sliding member, it is more preferable that the endurance time is 15 hours or longer, and even more preferably 20 hours or longer.

### 7. Property 4 (wear amount)

Furthermore, the wear amount as another measure for the sliding properties of a sliding member can be measured using the above-mentioned thrust unidirectional rotation method under similar conditions.

That is, the thrust unidirectional rotation method is performed for a predetermined time (20 hours), after 20 hours elapsed, the change in thickness is calculated from the initial value of a test piece formed from a sliding member, and the change in thickness could be taken as the wear amount.

Usually, as a measure for satisfactory sliding properties, it is suitable that the wear amount of the test piece is 100 µm or less.

Although it may vary depending on the purpose, morphology, and the like of the sliding member, it is more preferable that the wear amount of the test piece is 80 µm or less, and even more preferably 50 µm or less.

When a melting phenomenon is recognized in the test piece before 20 hours have elapsed, the test according to the thrust unidirectional rotation method is terminated at that time point, the change in thickness is calculated from the initial value of the test piece formed from the sliding member, and the change in thickness is taken as the wear amount.

Fig. 1C is a figure for describing the relationship between the firing temperature of carbon fiber (including uncarbonized carbon fiber and other carbon fiber) and the wear amount under the above-described predetermined conditions in a case where a resin composition for a sliding material including the carbon fiber is processed into a sliding member.

That is, the axis of abscissa in Fig. 1C represents the firing temperature (°C) of carbon fiber, and the axis of ordinate indicates the relationship with the wear amount (µm) under the above-mentioned measurement conditions in a case where a resin composition for a sliding material prepared by blending carbon fiber that has been fired at a predetermined temperature, is processed into a sliding member.

Each data of the characteristic curve in Fig. 1C is based on the wear amounts of Examples 1 to 3 and Comparative Examples 1 and 2, in which the kinds and blending amounts of the blending components (a) to (c) are the same, and only the firing temperature of carbon fiber is different, as will be described below.

As can be understood from the characteristic curve in Fig. 1C, as the firing temperature of the carbon fiber increases, the wear amount tends to decrease for the moment and then increase.

More specifically, when the firing temperature of the carbon fiber is below 600°C, the wear amount has a value exceeding 100 µm; however, the wear amount is 100 µm or less at 600°C and has a value exceeding 100 µm again when the temperature exceeds 800°C.

Therefore, when the results of the characteristic curves shown in Figs. 1A to 1C are taken together into consideration, it could be said that by adjusting the firing temperature of carbon fiber to a predetermined range (800°C or lower, particularly 600 to 800°C), when the resin composition for a sliding material is processed into a sliding member, a favorable balance between the linear expansion coefficient and the sliding properties could be achieved, and the friction coefficient and the wear amount, which are sliding properties, could be controlled to be equal to or below predetermined values while maintaining the linear expansion coefficient low.

### EXAMPLES

Hereinafter, the present invention will be described in detail based on Examples. However, the scope of rights of the invention is not to be narrowed by the description of Examples without any particular reason.

Furthermore, the resin as the blending component (a), the uncarbonized carbon fiber as the blending component (b), the inorganic material as the blending component (c), and the lubricating additive and the like as the blending component (d) used in the Examples are as follows.
(A) Blending component (a)
   (A-1) Polyphenylene sulfide resin (PPS resin) (manufactured by Polyplastics Co., Ltd., trade name "DURAFIDE", PPS resin: linear polymer)
   (A-2) Polyether ether ketone resin (PEEK resin) (manufactured by Solvay Specialty Polymers USA, LLC, trade name "KETASPIRE")
   (A-3) Polyether sulfone resin (PES resin) (manufactured by SUMITOMO CHEMICAL COMPANY, LIMITED, trade name "SUMIKAEXCEL"
(B) Blending component (b)
   (B-1) Isotropic pitch uncarbonized carbon fiber 1 (firing temperature: 700°C, firing time: 30 minutes, average diameter: 15 µm, average length: 200 µm, saturated moisture percentage: 5.8% by weight)
   (B-2) Isotropic pitch uncarbonized carbon fiber 2 (firing temperature: 650°C, firing time: 30 minutes, average diameter: 15 µm, average length: 200 µm, saturated moisture percentage: 5.5% by weight)
   (B-3) Isotropic pitch uncarbonized carbon fiber 3 (firing temperature: 750°C, firing time: 30 minutes, average diameter: 15 µm, average length: 200 µm, saturated moisture percentage: 6.5% by weight)
   (B') Carbon fiber corresponding to blending component (b)
   (B'-1) Isotropic pitch carbon fiber 1 (firing temperature: 450°C, firing time: 30 minutes, average diameter: 15 µm, average length: 200 µm, saturated moisture percentage: 8.5% by weight)
   (B'-2) Isotropic pitch carbon fiber 2 (firing temperature: 1300°C, firing time: 30 minutes, average diameter: 15 µm, average length: 200 µm, saturated moisture percentage: 0.5% by weight)
(C) Blending component (c)
   (C-1) Talc (manufactured by NIPPON TALC CO., LTD., trade name "MS-P", average particle size: 14 µm)
   (C-2) Mica (manufactured by YAMAGUCHI MICA CO., LTD., trade name "J-31M", average particle size: 23 µm)
(D) Blending component (d)
   (D-1) Polytetrafluoroethylene (PTFE) (manufactured by AGC Inc., trade name "FLUON (registered trademark) PTFE", average particle size: 5 µm)
   (D-2) Perfluoroalkoxy alkane (PFA) (manufactured by Daikin Industries, Ltd., trade name "NEOFLON", average particle size: 5 µm)

### [Example 1]

### 1. Production of resin composition for a sliding material and sliding member for evaluation

### (1) Production of resin composition for a sliding material

As shown in Table 1, 100 parts by weight (pbw) of B-1 as the uncarbonized carbon fiber of the blending component (b) and 30 parts by weight of C-1 as the inorganic material of the blending component (c) were weighed with respect to 100 parts by weight of a PPS resin as A-1, which is the resin component of the blending component (a), and the components were accommodated in a predetermined container with a stirrer.

Furthermore, as shown in Table 2, it was separately verified using TGA that only for the uncarbonized carbon fiber of the blending component (b), the TG5 was 450°C.

In addition, it was separately verified by XPS elemental analysis that the amount of carbon on the surface of the uncarbonized carbon fiber of the blending component (b) was 93% by weight.

Next, the blending components (a) to (c) were stirred to become uniform using a mixer as a capacity of 20 L as a stirrer under the conditions of a speed of rotation of 400 rpm for 90 seconds, and a resin composition for a sliding material was obtained.

Next, the obtained resin composition for a sliding material was dried using a heating furnace heated to 130°C in the atmosphere, and a resin composition for a sliding material (powder form) having a moisture percentage of 0.01% by weight or less was obtained.

Next, the obtained resin composition for a sliding material (powder form) was melt kneaded using a twin-screw extruder, and a composition in a pellet form was obtained.

### (2) Production of member for evaluation

The obtained resin composition for a sliding material (pellet form) was charged into a predetermined mold using an injection molding apparatus, and then a member for evaluation A pressure-molded into a plate shape having a size of 5 mm (breadth) × 5 mm (longitudinal width) × 3 mm (thickness) and a member for evaluation B pressure-molded into a plate shape having a size of 30 mm (breadth) × 30 mm (longitudinal width) × 3 mm (thickness), both under predetermined pressurization conditions (for example, 10 to 200 MPa), were obtained.

Those members for evaluation are substitute members for evaluating various characteristics in a sliding member obtained by processing the resin composition for a sliding material, and among the members for evaluation, the member for evaluation A is used in Evaluation 6 (linear expansion coefficient) that will be described below, while the member for evaluation B is used in Evaluation 7 (friction coefficient), Evaluation 8 (endurance time), and Evaluation 9 (wear amount) that will be described below.

### 2. Evaluation of resin composition for a sliding material and sliding member

### (1) Evaluation 1 (firing temperature)

The firing temperature of carbon fiber was evaluated according to the following evaluation criteria. The results are shown in Table 2 as Eva 1.
⊙ (Very good): The temperature is 650 to 750°C.
O(Good): The temperature is 600 to below 650°C, or above 750 to 800°C.
△(Fair): The temperature is 500 to below 600°C, or above 800 to 1000°C.
×(Bad): The temperature is below 500 or above 1000°C.

### (2) Evaluation 2 (tensile modulus)

The tensile modulus of carbon fiber was measured according to JIS R 7606:2000, and evaluated according to the following evaluation criteria. The results are shown in Table 2 as Eva 2.
⊙ (Very good): The tensile modulus is 15 to 25 GPa.
○(Good): The tensile modulus is 10 to below 15 GPa, or above 25 to 35 GPa.
△(Fair): The tensile modulus is 1 to below 10 GPa, or above 35 to 50 GPa.
×(Bad): The tensile modulus is below 1 GPa, or above 50 GPa.

### (3) Evaluation 3 (tensile elongation)

The tensile elongation of carbon fiber was measured according to JIS R 7606:2000 and evaluated according to the following evaluation criteria. The results are shown in Table 2 as Eva 3.
⊙(Very good): The tensile elongation is 2.3 to 4%.
○(Good): The tensile elongation is 2% to below 2.3%, or above 4 to 5%.
△(Fair): The tensile elongation is 1.5% to below 2%, or above 5 to 6%.
×(Bad): The tensile elongation is below 1.5% or above 6%.

### (4) Evaluation 4 (volume resistivity)

The volume resistivity of carbon fiber was measured by a four-terminal method using a digital voltmeter and evaluated according to the following evaluation criteria. The results are shown in Table 2 as Eva 4.
⊙(Very good): The volume resistivity is 5×10⁰ to 1×10³ ohm·cm.
O(Good): The volume resistivity is 1×10⁰ to below 5×10⁰ ohm·cm, or above 1×10³ to 1×10⁴ ohm·cm.
△(Fair): The volume resistivity is 1×10⁻¹ to below 1×10⁰ ohm·cm, or above 1×10⁴ to 1×10⁵ ohm·cm.
×(Bad) : The volume resistivity is below 1×10⁻¹ ohm·cm or above 1×10⁵ ohm·cm.

### (5) Evaluation 5 (TG5)

The TG5 (5% weight loss temperature) of carbon fiber was measured using a TGA (manufactured by Mettler-Toledo International, Inc., product name "TGA/SDTA851e") under the conditions of an air flow rate of 100 ml/min and a temperature increase rate of 5°C/min, and was evaluated according to the following evaluation criteria. The results are shown in Table 2 as Eva 5.
⊙(Very good): The TG5 is 430 to 500°C.
O(Good): The TG5 is 400 to below 430°C, or above 500 to 550°C.
△(Fair): The TG5 is 350 to below 400°C, or above 550 to 600°C.
×(Bad): The TG5 is below 350°C, or above 600°C.

### (6) Evaluation 6 (linear expansion coefficient)

The linear expansion coefficient of a resin molded article as a sliding member was measured for the member for evaluation A according to JIS K 7197:2012 using a thermomechanical analyzer (manufactured by Mettler-Toledo International, Inc., product name "TMA/SDTA841e"), and was evaluated according to the following evaluation criteria. The results are shown in Table 2 as Eva 6.
O(Very good): The linear expansion coefficient is 4.5×10⁻⁵/°C or less.
O(Good): The linear expansion coefficient is 5×10⁻⁵/°C or less.
△(Fair): The linear expansion coefficient is 5.5×10⁻⁵/°C or less.
×(Bad): The linear expansion coefficient is above 5.5×10⁻⁵/°C.

### (7) Evaluation 7 (friction coefficient)

The friction coefficient as one of the measures of the sliding properties of a sliding member was measured for the member for evaluation B according to JIS K 7218:1986 using the above-mentioned thrust unidirectional rotation method under the above-mentioned predetermined conditions, and then was evaluated according to the following evaluation criteria. The results are shown in Table 2 as Eva 7.
⊙(Very good): The friction coefficient is 0.05 or less.
O(Good): The friction coefficient is 0.1 or less.
△(Fair): The friction coefficient is 0.4 or less.
×(Bad): The friction coefficient is above 0.4.

### (8) Evaluation 8 (endurance time)

The endurance time as one of the measures of the sliding properties of a sliding member was measured for the member for evaluation B according to JIS K 7218:1986 using the above-mentioned thrust unidirectional rotation method by measuring the time taken until a melting phenomenon occurred, and the endurance time was evaluated according to the following evaluation criteria. The results are shown in Table 2 as Eva 8.
⊙(Very good): The melting phenomenon was not observed over a period of 20 hours.
O(Good): The melting phenomenon was not observed over a period of 10 hours or more.
△(Fair): The melting phenomenon was not observed over a period of 1 hour or more.
×(Bad): The melting phenomenon was observed in below 1 hour.

### (9) Evaluation 9 (wear amount)

The wear amount as one of the measures of the sliding properties of a sliding member was measured for the member for evaluation B according to JIS K 7218:1986 using the above-mentioned thrust unidirectional rotation method after a lapse of 20 hours, and the wear amount was evaluated according to the following evaluation criteria. The results are shown in Table 2 as Eva 9.

When the melting phenomenon was recognized in the member for evaluation before 20 hours had elapsed, the test according to the thrust unidirectional rotation method was terminated at that time point, the change in thickness was calculated from the initial value of the member for evaluation, and the change in thickness was taken as the wear amount.
○(Very good): The wear amount is 50 µm or less.
O(Good): The wear amount is 80 µm or less.
△(Fair): The wear amount is 100 µm or less.
×(Bad): The wear amount is above 100 µm.

### [Examples 2 and 3]

In Examples 2 and 3, the resin compositions for a sliding material and sliding members for evaluations were produced in the same manner as in Example 1, except that B-2 and B-3 were respectively used as the uncarbonized carbon fiber of the blending component (b), and each of them was evaluated. The obtained evaluation results and the like are shown in Table 1 and Table 2.

As shown in Table 2, it was separately verified using a TGA that only for the uncarbonized carbon fiber as the blending component (b), the TG5 values were 440°C and 460°C, respectively.

In addition, it was separately verified by XPS elemental analysis that the amounts of carbon on the surface of the uncarbonized carbon fiber as the blending component (b) were 90% by weight and 95% by weight, respectively.

### [Examples 4 and 5]

In Examples 4 and 5, the resin compositions for a sliding material and sliding members for evaluation were produced in the same manner as in Example 1, except that the blending amounts of the uncarbonized carbon fiber as the blending component (b) were changed to 50 parts by weight and 120 parts by weight, respectively, with respect to 100 parts by weight of the resin component as the blending component (a), and each of them was evaluated. The obtained evaluation results and the like are shown in Table 1 and Table 2.

### [Examples 6 and 7]

In Examples 6 and 7, the resin compositions for a sliding material and sliding members for evaluation were produced in the same manner as in Example 1, except that the blending amounts of the inorganic material as the blending component (c) were changed to 60 parts by weight and 80 parts by weight, respectively, with respect to 100 parts by weight of the resin component as the blending component (a), and each of them was evaluated. The obtained evaluation results and the like are shown in Table 1 and Table 2.

### [Examples 8 and 9]

In Examples 8 and 9, the resin compositions for a sliding material and sliding members for evaluation were produced in the same manner as in Example 1, except that the kind of the resin component as the blending component (a) was changed to A-2 and A-3, respectively, and each of them was evaluated. The obtained evaluation results and the like are shown in Table 1 and Table 2.

### [Examples 10 and 11]

In Examples 10 and 11, the resin compositions for a sliding material and sliding members for evaluation were produced in the same manner as in Example 1, except that the kind of the inorganic material as the blending component (c) was changed to C-2 and a mixture of C-1/C-2 (mixing weight ratio: 80/20), and each of them was evaluated. The obtained evaluation results and the like are shown in Table 1 and Table 2.

### [Examples 12 and 13]

In Examples 12 and 13, the resin compositions for a sliding material and sliding members for evaluation were produced in the same manner as in Example 1, except that the kind (D-1 and D-2) and the blending amount (5 parts by weight and 25 parts by weight) of the lubricating additive as the blending component (d) were respectively changed and added, and each of them was evaluated. The obtained evaluation results and the like are shown in Table 1 and Table 2.

### [Comparative Examples 1 and 2]

In Comparative Examples 1 and 2, the resin compositions for a sliding material and sliding members for evaluation were produced in the same manner as in Example 1, except that the carbon fiber corresponding to the blending component (b) was changed to B'-1 and B'-2, respectively, and each of them was evaluated. The obtained evaluation results and the like are shown in Table 1 and Table 2.

As shown in Table 2, it was separately verified using a TGA that only for the carbon fiber corresponding to the blending component (b), the TG5 values were 390°C and 560°C, respectively.

In addition, it was separately verified by XPS elemental analysis that the amounts of carbon on the surface of the carbon fiber corresponding to the blending component (b) were 84% by weight and 97% by weight, respectively.

### [Comparative Example 3]

In Comparative Example 3, a resin composition for a sliding material and a sliding member for evaluation were produced in the same manner as in Example 1, except that the blending amount of the uncarbonized carbon fiber as the blending component (b) was changed to 0.5 parts by weight with respect to 100 parts by weight of the resin component as the blending component (a), and each of them was evaluated. The obtained evaluation results and the like are shown in Table 1 and Table 2.

### [Comparative Example 4]

In Comparative Example 4, a resin composition for a sliding material and a sliding member for evaluation were produced in the same manner as in Example 1, except that the blending amount of the inorganic material as the blending component (c) was changed to 5 parts by weight with respect to 100 parts by weight of the resin component as the blending component (a), and each of them was evaluated. The obtained evaluation results and the like are shown in Table 1 and Table 2.

### [Comparative Example 5]

In Comparative Example 5, a resin composition for a sliding material and a sliding member for evaluation were produced in the same manner as in Example 1, except that the blending amount of the uncarbonized carbon fiber as the blending component (b) was changed to 450 parts by weight, and the blending amount of the inorganic material as the blending component (c) was changed to 10 parts by weight, with respect to 100 parts by weight of the resin component as the blending component (a), and each of them was evaluated. The obtained evaluation results and the like are shown in Table 1 and Table 2.

### [Comparative Example 6]

In Comparative Example 6, a resin composition for a sliding material and a sliding member for evaluation were produced in the same manner as in Example 1, except that the blending amount of the uncarbonized carbon fiber as the blending component (b) was changed to 50 parts by weight, and the blending amount of the inorganic material as the blending component (c) was changed to 100 parts by weight, with respect to 100 parts by weight of the resin component as the blending component (a), and each of them was evaluated. The obtained evaluation results and the like are shown in Table 1 and Table 2.

**[Table 1]**

| | Blending component (a) | | Blending component (b) | | | Blending component (c) | | Blending component (d) | |
|---|---|---|---|---|---|---|---|---|---|
| | Kind | Blending amount (pbw) | Kind | Firing temperature (°C) | Blending amount (pbw) | Kind | Blending amount (pbw) | Kind | Blending amount (pbw) |
| Example 1 | A-1 | 100 | B-1 | 700 | 100 | C-1 | 30 | | |
| Example 2 | A-1 | 100 | B-2 | 650 | 100 | C-1 | 30 | | |
| Example 3 | A-1 | 100 | B-3 | 750 | 100 | C-1 | 30 | | |
| Example 4 | A-1 | 100 | B-1 | 700 | 50 | C-1 | 30 | | |
| Example 5 | A-1 | 100 | B-1 | 700 | 120 | C-1 | 30 | | |
| Example 6 | A-1 | 100 | B-1 | 700 | 100 | C-1 | 60 | | |
| Example 7 | A-1 | 100 | B-1 | 700 | 100 | C-1 | 80 | | |
| Example 8 | A-2 | 100 | B-1 | 700 | 100 | C-1 | 30 | | |
| Example 9 | A-3 | 100 | B-1 | 700 | 100 | C-1 | 30 | | |
| Example 10 | A-1 | 100 | B-1 | 700 | 100 | C-1 | 30 | | |
| Example 11 | A-1 | 100 | B-1 | 700 | 100 | C-1/C-2 | 30 | | |
| Example 12 | A-1 | 100 | B-1 | 700 | 100 | C-1 | 30 | D-1 | 5 |
| Example 13 | A-1 | 100 | B-1 | 700 | 100 | C-1 | 30 | D-2 | 25 |
| Comparative Example 1 | A-1 | 100 | B'-1 | 450 | 100 | C-1 | 30 | | |
| Comparative Example 2 | A-1 | 100 | B'-2 | 1300 | 100 | C-1 | 30 | | |
| Comparative Example 3 | A-1 | 100 | B-1 | 700 | 0.5 | C-1 | 30 | | |
| Comparative Example 4 | A-1 | 100 | B-1 | 700 | 100 | C-1 | 5 | | |
| Comparative Example 5 | A-1 | 100 | B-1 | 700 | 450 | C-1 | 10 | | |
| Comparative Example 6 | A-1 | 100 | B-1 | 700 | 50 | C-1 | 100 | | |

**[Table 2]**

| | Tensile modulus (GPa) | Tensi le elong ation (%) | Volume resist ivity (ohm·c m) | TG5 (°C) | Linear expansion coefficien t (1×10⁻⁵/°C) | Frict ion coeff icien t (-) | Endur ance time (h) | Wear amount (µm) | Eva 1 | Eva 2 | Eva 3 | Eva 4 | Eva 5 | Eva 6 | Eva 7 | Eva 8 | Eva 9 |
|---|---|---|---|---|---|---|---|---|---|---|---|---|---|---|---|---|---|
| Example 1 | 18 | 2.2 | 1×10² | 450 | 4.4 | 0.05 | 20 | 35 | ⊙ | ⊙ | ○ | ⊙ | ⊙ | ⊙ | ⊙ | ⊙ | ⊙ |
| Example 2 | 16 | 2.3 | 1×10³ | 440 | 4.5 | 0.04 | 20 | 65 | ⊙ | ⊙ | ⊙ | ⊙ | ⊙ | ⊙ | ⊙ | ⊙ | ○ |
| Example 3 | 20 | 2.1 | 1×10¹ | 460 | 4.3 | 0.06 | 20 | 55 | ⊙ | ⊙ | ○ | ⊙ | ⊙ | ⊙ | ○ | ⊙ | ○ |
| Example 4 | 18 | 2.2 | 1×10² | 450 | 4.6 | 0.05 | 20 | 40 | ⊙ | ⊙ | ○ | ⊙ | ⊙ | ○ | ⊙ | ⊙ | ⊙ |
| Example 5 | 18 | 2.2 | 1×10² | 450 | 4.3 | 0.05 | 20 | 45 | ⊙ | ⊙ | ○ | ⊙ | ⊙ | ⊙ | ⊙ | ⊙ | ⊙ |
| Example 6 | 18 | 2.2 | 1×10² | 450 | 4.6 | 0.06 | 20 | 60 | ⊙ | ⊙ | ○ | ⊙ | ⊙ | ○ | ○ | ⊙ | ○ |
| Example 7 | 18 | 2.2 | 1×10² | 450 | 4.7 | 0.07 | 20 | 70 | ⊙ | ⊙ | ○ | ⊙ | ⊙ | ○ | ○ | ⊙ | ○ |
| Example 8 | 18 | 2.2 | 1×10² | 450 | 3.6 | 0.06 | 20 | 50 | ⊙ | ⊙ | ○ | ⊙ | ⊙ | ⊙ | ○ | ⊙ | ⊙ |
| Example 9 | 18 | 2.2 | 1×10² | 450 | 3.8 | 0.1 | 20 | 80 | ⊙ | ⊙ | ○ | ⊙ | ⊙ | ⊙ | ○ | ⊙ | ○ |
| Example 10 | 18 | 2.2 | 1×10² | 450 | 4.6 | 0.05 | 20 | 65 | ⊙ | ⊙ | ○ | ⊙ | ⊙ | ○ | ⊙ | ⊙ | ○ |
| Example 11 | 18 | 2.2 | 1×10² | 450 | 4.4 | 0.06 | 20 | 70 | ⊙ | ⊙ | ○ | ⊙ | ⊙ | ⊙ | ○ | ⊙ | ○ |
| Example 12 | 18 | 2.2 | 1×10² | 450 | 4.4 | 0.04 | 20 | 25 | ⊙ | ⊙ | ○ | ⊙ | ⊙ | ⊙ | ⊙ | ⊙ | ⊙ |
| Example 13 | 18 | 2.2 | 1×10² | 450 | 4.4 | 0.03 | 20 | 20 | ⊙ | ⊙ | ○ | ⊙ | ⊙ | ⊙ | ⊙ | ⊙ | ⊙ |
| Comparative Example 1 | 0.5 | 0.4 | 5×10⁴ | 390 | 4.4 | 0.05 | 5 | 200 | × | × | × | Δ | Δ | ⊙ | ⊙ | Δ | × |
| Comparative Example 2 | 38 | 1. 9 | 5×10⁻² | 560 | 4.4 | 0.45 | 0.9 | 300 | × | Δ | Δ | × | Δ | ⊙ | × | × | × |
| Comparative Example 3 | 18 | 2.2 | 1×10² | 450 | 6 | 0.05 | 20 | 145 | ⊙ | ⊙ | ○ | ⊙ | ⊙ | × | ⊙ | ⊙ | × |
| Comparative Example 4 | 18 | 2.2 | 1×10² | 450 | 4 | 0.5 | 9 | 200 | ⊙ | ⊙ | ○ | ⊙ | ⊙ | ⊙ | × | Δ | × |
| Comparative Example 5 | 18 | 2.2 | 1×10² | 450 | 3.8 | 0.6 | 3 | 250 | ⊙ | ⊙ | ○ | ⊙ | ⊙ | ⊙ | × | Δ | × |
| Comparative Example 6 | 18 | 2.2 | 1×10² | 450 | 5.5 | 0.05 | 20 | 150 | ⊙ | ⊙ | ○ | ⊙ | ⊙ | Δ | ⊙ | ⊙ | × |

| | | | | | | | | | | | | | | | | | |
|---|---|---|---|---|---|---|---|---|---|---|---|---|---|---|---|---|---|
| *Eva 1: Firing temperature *Eva 2: Tensile modulus *Eva 3: Tensile elongation *Eva 4: Volume resistivity *Eva 5: TG5 *Eva 6: Linear expansion coefficient *Eva 7: Friction resistance *Eva 8: Endurance time *Eva 9: Wear amount | | | | | | | | | | | | | | | | | |

### INDUSTRIAL APPLICABILITY

As described above, according to the resin composition for a sliding material of the present invention, as the resin composition for sliding resin contains at least a blending component (b), which is a predetermined uncarbonized carbon fiber, together with an inorganic material as a blending component (c), with respect to a resin component as a blending component (a), when the resin composition is processed into a sliding member, a favorable balance between sliding properties and the linear expansion coefficient is obtained, and the friction coefficient, the wear amount, and the linear expansion coefficient as the sliding properties could be each maintained at a low value.

That is, according to the invention, a resin composition for a sliding material that provides excellent sliding properties and a low linear expansion coefficient over a long period of time, and a sliding member derived from such a resin composition for a sliding material, could be provided.

More specifically, even when the mating material is a member such as stainless steel (for example, Vickers hardness: 150 HV or higher), the friction coefficient is low, and the wear amount could be reduced over a long period of time.

Therefore, regarding the resin composition for a sliding material of the invention, the possibility of use as a machine part having low friction properties and excellent abrasion resistance, for example, in various bearings through predetermined processing, may be mentioned.

That is, the resin composition for a sliding material is expected to be widely used as a sliding member of submersible pumps for performing the circulation of coolants for automotive engines, inverters, batteries, fuel cells, or the like; the circulation of drug solutions, solvents, oils, beverages, and the like; and the circulation of hot water in water heaters, floor heating equipment, and the like, as well as other liquid pumps.

As an example, assuming a bearing for a submersible pump as a use application, when there is sufficient water on the sliding surface, the sliding surface is in a state close to fluid lubrication, and satisfactory sliding properties are obtained; however, in the early stages of pump operation, since the bearing and the mating shaft are subjected to friction in a dry state, satisfactory sliding properties are required even under dry conditions.

Furthermore, since it is necessary to maintain dimensional accuracy so that fluctuations in clearance due to thermal expansion are prevented from affecting rattling in a predetermined device or adhesion to a mating shaft, or from affecting the sliding properties upon water lubrication, a small linear expansion coefficient is required.

In this regard, the slide bearing of a water pump according to Patent Document 1 of the prior art includes at least one of polytetrafluoroethylene resin and graphite as a lubricating additive; however, it is insufficient to obtain sliding properties. That is, when the blending proportion of the lubricating additive is increased in order to obtain satisfactory low friction properties even under dry conditions, the linear expansion coefficient becomes notably large, strength of the bearing itself is decreased, and wear resistance is deteriorated.

On the other hand, when the blending proportion of carbon fiber is increased in order to keep the linear expansion coefficient low and improve wear resistance, low friction is not obtained, and there are problems such as damaging the mating material.

However, when a sliding member derived from the resin composition for a sliding material of the invention is used, even in a case where the blending proportion of carbon fiber is relatively decreased, the above-described problems characteristic of bearings for submersible pumps could be effectively suppressed.

Therefore, the resin composition for a sliding material of the invention and a sliding member derived from such a resin composition for a sliding material are particularly suitable for the use in bearings for submersible pumps, among a wide range of use applications.

## Claims

1. A resin composition for a sliding material, comprising the following blending components (a) to (c):
(a) 100 parts by weight of a resin component;
(b) 10 to 400 parts by weight of uncarbonized carbon fiber having a 5% weight loss temperature of 400 to 550°C; and
(c) 10 to 80 parts by weight of an inorganic material.

2. The resin composition for a sliding material according to claim 1, wherein a tensile modulus of the blending component (b) as measured according to JIS R 7606:2000 has a value within a range of 10 to 35 GPa.

3. The resin composition for a sliding material according to claim 1 or 2, wherein a tensile elongation of the blending component (b) as measured according to JIS R 7606:2000 has a value within a range of 2 to 5%.

4. The resin composition for a sliding material according to any one of claims 1 to 3, wherein an amount of carbon on a surface of the blending component (b) as determined by XPS elemental analysis has a value within a range of 85 to 96% by weight with respect to a total amount.

5. The resin composition for a sliding material according to any one of claims 1 to 4, wherein when the resin composition for a sliding material is processed into a sliding member, the sliding member has a linear expansion coefficient of 5×10⁻⁵/°C or less as measured according to JIS K 7197:2012.

6. The resin composition for a sliding material according to any one of claims 1 to 5, wherein a weight ratio of blending component (b)/blending component (c) has a value within a range of 1/1 to 10/1.

7. The resin composition for a sliding material according to any one of claims 1 to 6, wherein the blending component (a) is at least one selected from the group consisting of a polyphenylene sulfide resin, a polyether sulfone resin, a polyether ether ketone resin, a polyimide resin, and a thermosetting phenol resin.

8. A sliding member having a linear expansion coefficient of 5×10⁻⁵/°C or less as measured according to JIS K 7197:2012, the sliding member being derived from a resin composition for a sliding material including the following blending components (a) to (c):
(a) 100 parts by weight of a resin component;
(b) 10 to 400 parts by weight of uncarbonized carbon fiber having a 5% weight loss temperature of 400 to 550°C; and
(c) 10 to 80 parts by weight of an inorganic material.
